# EUROPÄISCHE PATENTSCHRIFT

(11) **EP 2 411 466 B1**
(45) Veröffentlichungstag und Bekanntmachung des Hinweises auf die Patenterteilung: **17.07.2013**
(21) Anmeldenummer: 10705887.7
(22) Anmeldetag: 02.03.2010
(51) Int. Cl.: C08L 33/04, C09D 133/04, C04B 41/48, C08L 33/12, C09D 133/12, C08F 2/22, C08F 2/48

(54) **ZUSAMMENSETZUNG UMFASSEND ALS WÄSSRIGE DISPERSION VORZUGSWEISE BENZOPHENON-HALTIGE (METH)ACRYLATPOLYMERE IN MISCHUNG MIT VON DIESEN VERSCHIEDENEN (METH)ACRYLATPOLYMEREN SOWIE DIE VERWENDUNG DER ZUSAMMENSETZUNG**
COMPOSITION COMPRISING AS THE AQUEOUS DISPERSION PREFERABLY (METH)ACRYLATE POLYMERS CONTAINING BENZOPHENONE IN A MIXTURE WITH (METH)ACRYLATE POLYMERS DIFFERENT THEREFROM AND THE USE OF SAID COMPOSITION
COMPOSITION COMPRENANT, SOUS FORME D'UNE DISPERSION AQUEUSE, DES POLYMÈRES DE (MÉTH)ACRYLATE RENFERMANT DE PRÉFÉRENCE DE LA BENZOPHÉNONE, EN MÉLANGE AVEC DES POLYMÈRES DE (MÉTH)ACRYLATE DIFFÉRENTS DE CEUX-CI, ET UTILISATION DE LADITE COMPOSITION

(30) Priorität: 24.03.2009 DE 102009001776
(43) Veröffentlichungstag der Anmeldung: 01.02.2012
(73) Patentinhaber: Evonik Röhm GmbH, 64293 Darmstadt (DE)
(72) Erfinder: BREINER, Christine Maria, 69514 Laudenbach (DE); GOMEZ ANDREU, Mario, 64319 Pfungstadt (DE); SCHMITT, Gerold, 63743 Aschaffenburg (DE); KLESSE, Wolfgang, 55127 Mainz (DE)
(86) Internationale Anmeldenummer: PCT/EP2010/052575
(87) Internationale Veröffentlichungsnummer: WO 2010/108762

(56) Entgegenhaltungen:
- EP-A1- 0 599 676
- EP-A1- 1 174 401
- EP-A2- 1 371 694
- WO-A1-00/63314
- DE-A1- 19 858 851

## Beschreibung

Die vorliegende Erfindung beschreibt eine Zusammensetzung aufweisend als wässrige Dispersion A) ein oder eine Mehrzahl von (Meth)acrylatpolymeren in Mischung mit B) einem oder einer Mehrzahl von A) verschiedenen, vorzugsweise Benzophenon-haltigen (Meth)acrylatpolymeren. Die Erfindung bezieht sich auch auf die Verwendung der beschriebenen wässrigen Dispersionen.

Polyacrylat-Dispersionen sind grundsätzlich bekannt. Schon seit geraumer Zeit verwendet man solche Dispersionen zur Beschichtung von verschiedenartigen Substraten, um diese zu versiegeln und zu schützen. Eine beispielhafte Anwendung betrifft die Versiegelung von mineralischen Substraten, wie Steinen, Betonen, Betondachsteinen, herkömmlichen Ziegeln und dergleichen mehr (vgl. dazu die US-PS 4,511,699 sowie die GB-PS 1 411 268).

EP 1174401 A1 offenbart ein Verfahren zur Herstellung eines beschichteten zementartigen Substrat mit glänzender Oberfläche, schmutzabweisenden Eigenschaften und verminderter Tendenz zu Ausblühungen. Insbesondere beinhaltet das Verfahren das Aufbringen einer Formulierungszusammensetzung auf ein ungehärtetes zementartiges Substrat und dessen Härtung. Die Beschichtungsformulierung enthält ein Emulsionspolymerisat mit einem Molekulargewicht im Bereich von 30.000 bis 300.000 und einer Glasübergangstemperatur im Bereich von -10 bis 60 °C. Ebenfalls offenbart wird ein Emulsionspolymerisat, enthaltend ein Photoinitiator-Monomer als polymerisierte Einheit, eine Beschichtungsformulierung enthaltend ein Photoinitiator-Molekül und eine Beschichtungsformulierung enthaltend ungesättigte ethylenische Polymere.

EP 599 676 A1 offenbart Acrylpolymere, die gegebenenfalls Styrol enthalten können, mit Glasübergangstemperaturen von weniger als 0 °C, insbesondere als Fassadenfarbe formuliert, umfassend das Copolymerisat aus (a) mindestens einem alpha, beta-monoolefinisch ungesättigten Carboxylatmonomer (b) mindestens einem (Meth)acrylsäureester eines primären oder sekundären Alkohols mit 1 bis 18 Kohlenstoffatomen, gegebenenfalls Styrol, (c) einer wirksamen Menge eines Comonomers mit Benzophenon-Strukturelement, sowie gegebenenfalls weiteren, mit Luftsauerstoff oxidierbaren Monomeren.

EP 1371694 A2 betrifft wässrige Dispersionen von Polymernanoteilchen (PNP's) mit einem mittleren Durchmesser von 1 bis 50 Nanometern, wobei die Teilchen als polymerisierte Einheiten mindestens ein mehrfach ethylenisch ungesättigtes Monomer und mindestens ein wasserlösliches Monomer umfassen, insbesondere zur Herstellung von Gebäudebeschichtungen, z. B. matten oder glänzenden Beschichtungen, Haftvermittler, Primer, schmutzabweisenden Deckbeschichtungen oder Abdichtungsmitteln für poröse Untergründe.

WO 00/63314 betrifft Kaschierklebstoffe, enthaltend eine wässrige Dispersion eines Polymeren, welches durch UV-Strahlung vernetzbar ist. Hierbei wird eine Glanzfolie, in der Regel orientiertes Polypropylen oder auch Polyacetat, mit dem flüssigen Klebstoff beschichtet und anschließend unter Druck und Warme auf den Bedruckstoff kaschiert. Es werden Kaschierklebstoffe zur Verfügung gestellt, welche nach der Kaschierung eine sofortige Weiterverarbeitung der Laminate erlauben, eine gute Haftung zu den Substraten und eine hohe Kohäsion in der Klebstoffschicht aufweisen.

DE 19858851 A1 offenbart wässrige Copolymerisatdispersion, im wesentlichen bestehend aus wässrigen Copolymerisatdispersionen mit einem Feststoffanteil von 20 bis 65 Gew.-%, wobei das Copolymerisat aus verschiedenen Monomeren aufgebaut ist, und wobei die Gewichtsanteile der verschiedenen Monomeren innerhalb der angegebenen Grenzen so gewählt sind, dass ein nur aus diesen Monomeren aufgebautes Kunstharz eine Glasübergangstemperatur im Bereich von -50 bis 35°C aufweisen würde, und Benzophenon, Acetophenon oder einem ihrer Derivate, sowie Emulgatoren und gegebenenfalls Schutzkolloiden.

Während bei Beschichtungen im Außenbereich der Fokus auf der Verwitterung des Materials in Form der beschichteten Substrate liegt, diese neigen unter dem Einfluss der Witterung zum Ausblühen, was meist in Form weißer, pustelartiger Gebilde auftritt und nach und nach zu einer Schädigung der mineralischen Substrate führt, hat man es bei Beschichtungen im Innenbereich häufig mit einer mangelnden Härte des Überzugs auf dem beschichteten Substrat zu tun. Die Härte und Dauerhaftigkeit der Beschichtung ist aber gerade für die Qualität der Beschichtung von Fußböden aus mineralischen Materialien wie Steinen oder Betonen besonders wichtig.

Aus der EP 0 355 028 A1 ist ein Verfahren bekannt, bei dem Substrate an ihren Oberflächen mit wässrigen Polyacrylatdispersionen beschichtet und die Beschichtungen anschließend bei erhöhter Temperatur getrocknet werden. Hierbei wird für die Beschichtung ein Gemisch eingesetzt aus
A) einer 20 bis 65 gew.-%igen, eine Mindestfilmbildetemperatur von -30 bis +30 ° C aufweisenden wässrigen Dispersion eines Copolymerisats aus
   a) 20 bis 70 % seines Gewichtes an (Meth)acrylestern von 3 bis 20 C-Atome enthaltenden, eine tertiäre CH-Gruppe aufweisenden Alkanolen,
   b) 30 bis 60 % seines Gewichtes an Styrol, alpha-Methylstyrol, Methacrylsäuremethylester, (Meth)-acrylsäure-tert. butylester und / oder (Meth)acrylnitril und
   c) 0,2 bis 7 % seines Gewichtes an 3 bis 5 C-Atome aufwejsenden Mono- und / oder Dicarbonsäuren und / oder deren gegebenenfalls am N-Atom durch eine 1 bis 4 C-Atome enthaltende Alkylgruppe substituierten Amiden und
B) 0,1 bis 5 Gew.-%, bezogen auf die Menge des in der Komponente (A) enthaltenen Copolymerisats, eines aromatischen Ketons.

Die Mischung wird dann zur Aushärtung vor oder nach dem Trocknen mit ultraviolettem Licht bestrahlt.

Als aromatisches Keton kommen gemäß der EP 0 355 028 A1 unter anderem beispielsweise Benzophenon und Benzophenonderivate wie 3,3'-Dimethyl-4-methoxybenzophenon, 3,- und 4-Hydroxybenzophenon, Benzophenon-2-carbonsäure, Benzophenon-3-carbonsäure, Benzophenon-4-carbonsäure und dergleichen sowie 2-, 3- und 4-Phenylbenzophenon, 2-, 3- und 4-Alkylbenzophenone mit 1 bis 10 C-Atomen in den Alkylresten, wie 2-, 3- und 4-Methylbenzophenon, 2-, 3-, 4-Nonylbenzophenon, Dialkylbenzophenone sowie auch olefinisch ungesättigte sowie wasserlösliche Benzophenonderivate in Frage.

Obwohl die Beschichtungen der EP 0 355 028 A1 bereits eine befriedigende Dauerhaftigkeit des Überzugs erkennen lassen, sind die Beschichtungen dennoch weiterhin verbesserungsbedürftig, insbesondere im Hinblick auf Eigenschaften wie Beständigkeit unter anderem gegen Witterung, gegen Lösungsmittel, gegen organische und anorganische Chemikalien, und im Hinblick auf Eigenschaften wie Härte des Überzugs, Trocknungsgeschwindigkeit der Beschichtung und dergleichen mehr.

Benzophenon und niedermolekulare Benzophenoderivate sind an sich weit verbreitete Photoinitiatoren. Bei Bestrahlung bilden sich Radikale, welche die Polymerisation oder Vernetzung ethylenisch ungesättigter Monomere bewirken können.

Carlini et al. berichten in Polymer, 1983, Vol. 24, May, Seite 599 ff. von Polymeren, die in der Seitenkette Benzophenon-Chromophore enthalten, und von deren Verwendung als hochwirksame Photoinitiatoren. Es werden Copolymere von Acryloxybenzophenon mit Menthylacrylat, Methylacrylat oder 1-Acryloxy-2-ethoxyethan offenbart, Die beschriebenen Copolymere weisen ca. 10 bis 90 Mol % an Acryloxybenzophenon-Einheiten auf und eignen sich zur Photoinitiierung der Polymerisation. Eine exakte Spezifizierung des Molekulargewichts der vorgestellten Photoinitiatoren findet in der genannten Veröffentlichung nicht statt.

Die US 5,900,472 A beschreibt copolymerisierbare Benzophenon Photoinitiatoren. Es werden Benzophenonderivate mit zwei bis vier (Meth)acrylat-Gruppen gezeigt sowie UV-härtbare Überzüge vorgestellt, die durch Umsetzung der mehrwertigen Benzophenonderivate mit (Meth)acrylat unter Strahlungseinwirkung erhältlich sind. Der US 5,900,472 A zufolge sind die Überzüge, welche unter Einsatz der mehrwertigen Benzophenone erhältlich sind, den bis dahin bekannten Überzügen mit bekannten Photoinitatoren insoweit überlegen, als sie eine verringerte Neigung zum "Ausbluten" (Migration) zeigen. Bis dato neigte unverbrauchter Photoinitiator zu diesem Phänomen, was seine Anwendung auf wenige Möglichkeiten einschränkte.

In Anbetracht des eingangs genannten und diskutierten Standes der Technik war es Aufgabe der Erfindung neuartige Zusammensetzungen für die Beschichtung aller Substrate anzugeben.

Die Komponenten der Zusammensetzung für die Beschichtung sollen dabei möglichst wohlfeil sein oder sich möglichst aus einfachen Grundstoffen auf einfache Weise nach Standardverfahren herstellen lassen.

Die Zusammensetzung selbst soll möglichst einfach und möglichst vielfältig einsetzbar oder anwendbar sein. Dabei soll die Zusammensetzung allen arbeitstechnischen Vorschriften genügen und vor allem auch gesundheitlich möglichst unbedenklich sein. In diesem Zusammenhang soll ein Augenmerk auch auf der VOC-Freiheit (keine volatilen organischen Verbindungen) der Zusammensetzung liegen.

Die Zusammensetzung soll aber nicht nur möglichst einfach erhältlich und anwendbar sein, sie soll auch die Schaffung von Überzügen auf einer möglichst großen Vielfalt von verschiedenartigen Substraten mit möglichst guten Eigenschaften gestatten.

Daneben sollen die Überzüge möglichst schnell und möglichst vollständig härten und/oder trocknen.

Zudem sollen die Überzüge und Beschichtungen eine verbesserte Dauerhaftigkeit aufweisen. Hierzu soll eine möglichst gute, das heißt vollständige und intensive Vernetzung der Beschichtung bei der Härtung erzielbar sein.

Weiterhin sollen die aus der erfindungsgemäßen Zusammensetzung resultierenden Überzüge möglichst wenig "Ausbluten" (Migration), so dass auch keine oder möglichst wenig Substanzen an die Umwelt abgegeben werden. Die Überzüge sollen sich also im Laufe der Zeit nach Möglichkeit nicht oder wenn dann nur sehr wenig verändern.

Außerdem sollen die resultierenden Beschichtungen und Überzüge ein möglichst geringes Aufnahmevermögen für organische Lösungsmittel besitzen. Insbesondere sollen die Überzüge eine möglichst geringe Quellung mit MEK (Methylethylketon) haben, was als ein Indiz für einen hohen Vernetzungsgrad (eine hohe Härte) der Beschichtung gewertet werden kann.

Schließlich sollen die aus den Zusammensetzungen der Erfindung resultierenden Beschichtungen und Überzüge eine verbesserte Beständigkeit in Kombination mit einer hohen Härte aufweisen.

Außerdem sollen die erfindungsgemäßen Beschichtungen und Überzüge sich möglichst universell mit bekannten Dispersionen zur Beschichtung einsetzen lassen, um die Eigenschaften der bekannten Dispersionen gezielt einstellen und beeinflussen zu können (d.h. Blends zur Aufwertung der bekannten Dispersionen)

Die erfindungsgemäßen Aufgaben oder ein Teilaspekt oder mehrere Teilaspekte der erfindungsgemäßen Aufgaben werden gelöst durch eine
Zusammensetzung aufweisend als wässrige Dispersion:
A) auf 100 Gewichtsteile eines oder einer Mehrzahl von (Meth)acrylatpolymeren;
B) 1 - 400 Gewichtsteile eines oder einer Mehrzahl von (Meth)acrylatpolymeren, welche eine oder merhere verbindungen der Formel (I) einpolymerisiert enthalten, wobei die (Meth)acrylatpolymere B) von den unter A) genannten (Meth)acrylatpolymeren verschieden sind, und wobei die (Meth)acrylatpolymeren B) erhältlich sind durch Emulsionspolymerisation einer Mischung aufweisend
   a) 0,1 bis 99,9 Gewichtsprozent wenigstens einer Verbindung der allgemeinen Formel (I), vorzugsweise eines Benzophenon(meth)acrylats, 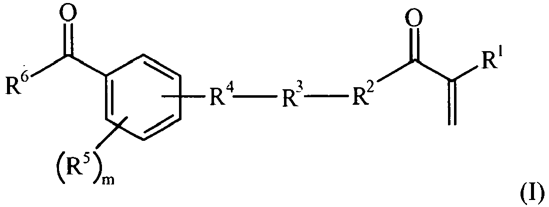
      worin R¹ Wasserstoff oder Methyl bedeutet;
      R² für Sauerstoff oder NH steht;
      R³ für einen Rest der allgemeinen Formel II steht 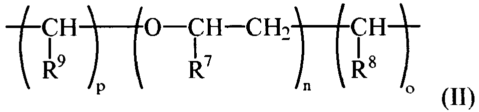 worin
         R⁷, R⁸, R⁹ unabhängig voneinander Wasserstoff oder Methyl sind,
         n eine ganze Zahl von Null bis zweihundert ist,
         o und p unabhängig voneinander eine ganze Zahl von Null bis zwei sind, wobei für den Fall, dass die Summe von n und o und p Null ist, R³ eine Bindung ist;
      R⁴ eine Bindung, Sauerstoff, NH, O-CO-O, HN-CO-O, HN-CO-NH oder Schwefel ist; R⁵ für Wasserstoff, Halogen oder einen eins bis 20 Kohlenstoffatome aufweisenden Rest steht, der gegebenenfalls mit Sauerstoff, Stickstoff und/oder Schwefel substituiert ist, wobei m für eine ganze Zahl von eins bis vier steht; und
      R⁶ für einen Aryl- oder Heterocyclylrest steht;
      und
   b) 99,9 bis 0,1 Gew.-% eines oder einer Mehrzahl von a) verschiedener mit a) copolymerisierbarer ethylenisch ungesättigter Monomere, wobei die Komponenten a) und b) zusammen 100 Gew.-% der polymerisierbaren Bestandteile der Mischung ergeben;
und wobei sich die Gewichtsteile von A) und B) auf den Feststoffanteil der Polymeren A) oder B) in der wässrigen Dispersion beziehen.

Eine derartige Zusammensetzung erlaubt auf nicht ohne weiteres vorhersehbare Weise unter Inkorporation von polymergebundenen UV-härtbaren (Meth)acrylatpolymeren in an sich bekannten Acrylatdispersionen die Schaffung von Beschichtungen oder Überzügen insbesondere auf mineralischen Substraten mit äußerst vorteilhaften Eigenschaften.

Besondere Vorteile des Systems der erfindungsgemäßen Zusammensetzung bestehen auch darin, dass weder zusätzliche Photoinitiatoren für die UV-Härtung benötigt werden noch mit einer Migration des UV-aktiven Teils zu rechnen ist, da die UV-aktive Substanz als einpolymerisiertes Monomer in die entsprechende Beschichtung eingebaut ist.

Weiter ist bemerkenswert, dass es sich bei den in der erfindungsgemäßen Zusammensetzung enthaltenen vorzugsweise Benzophenon-haltigen Verbindungen, primär um Monomere handelt, die in Dispersionen eine Aushärtung über UV-Vernetzung bewirken, und nicht um polymere Photoinitiatoren. Dies stellt einen wesentlichen Unterschied zum bekannten Stand der Technik dar.

Die Zusammensetzungen der Erfindung weisen in wässriger Dispersion den Bestandteil A) auf. Hierbei handelt es sich um ein (Meth)acrylatpolymer oder eine Mischung von zwei oder mehreren voneinander verschiedenen (Meth)acrylatpolymeren. Unter der Schreibweise (Meth)acrylat versteht man im Sinne der Erfindung Acrylate und / oder Methacrylate.

Bei den (Meth)acrylatpolymeren A) handelt es sich um Homo- oder Copolymerisate. Als Homopolymerisate sind die (Meth)acrylatpolymere erhältlich durch Polymerisation von Monomeren. Als in Frage kommende Monomere werden unter anderem und bevorzugt genannt: Acryl- und/oder Methacrylsäureester von 1 bis 24, insbesondere 1 bis 12 C-Atomen aufweisenden Alkanolen, wie Methyl-, Ethyl-, Propyl-, i-Amyl-, i-Octyl, n-, iso - und tert.-Butyl-, Cyclohexyl-, 2-Ethylhexyl-, Decyl-, Lauryl- und ferner Stearylacrylat und/oder -methacrylat.

Copolymerisate enthalten als Hauptmonomere im allgemeinen überwiegende Anteile meist 50 bis 99,99 Gew.-%, vorzugsweise 70 bis 97,5 Gew.-% der bei den Homopolymerisaten genannten Acryl-und/oder Methacrylsäureester von 1 bis 24 Kohlenstoffatomen aufweisenden Alkanolen. Als Comonomere kommen z.B. Vinylester 1 bis 20, insbesondere 2 bis 3, C-Atome enthaltender gesättigter Carbonsäuren, wie Vinylformiat, Vinylacetat, Vinylpropionat und ferner Vinyllaurat und Vinylstearat, ferner Vinylether mit 3 bis 22 C-Atomen, wie Methyl-, Ethyl-, Butyl-, Hexyl-, Octadecylvinylether, Vinylaromaten mit 8 bis 12 C-Atomen, besonders Styrol oder ferner U-Methylstyrol, Vinyltoluole, tert.-Butylstyrol und Halogenstyrole, Olefine mit 2 bis 20 C-Atomen wie besonders Ethylen, Propylen und ferner n- und iso-Butylen, Diisobuten, Triisobuten und Oligopropylene und/oder Vinylhalogenide, wie besonders Vinylchlorid und Vinylidenchlorid sowie Allylether oder Allylester in Betracht. Von besonderem Interesse sind auch solche Copolymerisate, die als Comonomere zusätzlich zu anderen Acryl- und Methacrylestern 0,5 bis 20 Gew.-%, bezogen auf die Copolymerisate, vorzugsweise 2 bis 10 Gew.-%, Tetrahydrofurfuryl-2-acrylat oder - methacrylat und/oder Alkoxygruppen enthaltende Monomere wie 3-Methoxybutyl(meth)acrylat, 2-Methoxyethyl(meth)acrylat, 2-Butoxyethyl(meth)acrylat, 2-Ethoxyethyl(meth)acrylat, N-Butoxymethyl(meth)acrylamid und/oder N-Isobutoxymethyl(meth)acrylamid, einpolymerisiert enthalten, wobei Tetrahydrofurfuryl-2-acrylat und -methacrylat und 3-Methoxybutylacrylat und -methacrylat vorgezogen werden.

Mit besonderem Vorteil enthalten die Copolymerisate zusätzlich 0,1 bis 10, vorzugsweise 0,5 bis 4 Gew.-% 3 bis 5 C-Atome enthaltende alpha, beta-monoolefinisch ungesättigte Mono- und/oder Dicarbonsäuren und/oder deren Amide oder gegebenenfalls Monoalkylester oder Anhydride der Dicarbonsäuren einpolymerisiert.

Beispiele hierfür sind vor allem Acryl- und Methacrylsäure und Itaconsäure sowie ferner Crotonsäure, Fumarsäure, Maleinsäure, Maleinsäureanhydrid, n-Butylmaleinsäuremonoester, Fumarsäuremonoethylester, Itakonsäuremonomethylester und Maleinsäuremonomethylester. Von den Amiden derartiger Carbonsäuren sind besonders Acrylamid und Methacrylamid von Interesse. Geeignet sind ferner N-Methylacrylamid und -methacrylamid, N-Methylolacrylamid und -methacrylamid, Maleinsäuremono- und diamid, Itakonsäuremono- und -diamid und Fumarsäuremono - und -diamid. In manchen Fallen kommen auch in Mengen von 0,1 bis 5 Gew.-%, bezogen auf die Copolymerisate Vinylsulfonsäure oder ferner Vinylphosphonsäuren in Betracht.

Als Comonomere kommen in Mengen von bis zu 30 Gew.-%, vorzugsweise von 0,5 bis 5 Gew.-% auch olefinisch ungesättigte tertiäre Aminoverbindungen in Betracht, wie N,N-Dimethyl-, N,N-Diethylamino-ethyl-(meth)-, N,N-Diisopropyl-(meth)-, N,N-Dibutyl-(meth)-acrylamid und -(meth)acrylat, Dimethyl-und Diethylaminoethylvinylether, N-Vinylimidazol, N-Vinylimidazolin, Vinylpyridine, Dialkyl(meth)acrylamide, N-Vinylformamid, N-Vinylpyrrolidon, N-Vinylcaprolactam, p-Hydroxy(meth)acrylsäureanilid, N-tert.-Butyl(meth)- acrylamid, Diaceton(meth)acrylamid, N-(1-Methylundecyl)(meth)acrylamid, N-Isobornyl(meth)acrylamid, NAdamantyl-(meth)acrylamid, N-Benzyl(meth)acrylamid, N-4-Methylphenyl-, Methyl-(meth)acrylamid, N-Diphenylmethylacrylamid, Phthalimidomethyl(meth)-acrylamid, (Meth)acrylamidohydroxiessigsäure, (Meth)-acrylamidoessigsäure, (Meth)acrylamidoessigsäureester wie (Meth)acrylamidoessigsäuremethylester, 2-(Meth)acrylamido-2-methyl-buttersäure, N-(2,2,2-Trichloro-1-hydroxi)ethyl(meth)acrylamid, N,N-bis(2-cyanoethyl)methacrylamid, N-(1 ,1,1 - Trishydroximethyl), Methyl(meth)acrylamid und N-(3-Hydroxi-2,2-di-methylpropyl)-(meth)acrylamid. Genannt seien ferner 2-Hydroxi-3-[N,N-di(2-hydroxiethyl)]-propyl(meth)acrylat, 2-Methoxi-3-[N,N-di(2-hydroxiethyl)∼propyl(meth)acrylat, 2-Hydroxi-3-[N-hydroxyethyl-N-alkyl]-propyl(meth)acrylate und/oder 2-Hydroxi-3-[N,N-dialkyl]-propyl(meth)acrylat mit 1 bis 10 C-Atomen im Alkylrest, wie 2-Hydroxi-3-[N-hydroxyethyl-N-methyl]-propyl(meth)acrylat und 2-Hydroxi-3-[N-ethyl-N-methyll-propylmethacrylat.

Schließlich kommen auch noch in Mengen bis zu 30 Gew.-%, bevorzugt 0,1 bis 25 Gew.-%, besonders bevorzugt 0,5 bis 20 Gew.-% monoolefinisch ungesättigte Monomere von der Art des 3-Cyclohexylpropyl-1-(meth)acrylat, Cyclohexyl-(meth)acrylat, 4-tert.-Butylcyclohexyl(meth)acrylat, 2-N-Morpholinoethyl( meth)acrylat, 2-N-Morpholino-N-hexyl(meth)acrylat und Furfuryl(meth)acrylat, Isobomyl-(meth)acrylat, N-Cyclohexyl(meth)acrylat und N-Isobornyl(meth)acrylat in Frage.

Weiters können die Copolymerisate noch weitere Monomere mit funktionellen Gruppen in Mengen bis zu 20 % ihres Gewichts einpolymerisiert enthalten, z.B. Hydroxalkyl(meth)acrylate, wie 2-Hydroxypropyl(meth)acrylat, 2-Hydroxyethyl(meth)acrylat, 4-Hydroxybutyl(meth)acrylat sowie Glycidylacrylat und -methacrylat. Auch Monoacrylsäure- und Monomethacrylsäureester von Polyetherolen oder von propoxylierten Fettalkoholen, beispielsweise eines Molekulargewichts von 200 bis 10.000 oder von polyethoxylierten Alkanolen und/oder Phenolen können in Mengen von 0,5 bis 10 Gew.-% in manchen Fällen als Comonomere von Vorteil sein.

Zusammensetzungen von besonderem Interesse kennzeichnen sich beispielsweise dadurch, dass das (Meth)acrylatpolymer A) ausgewählt ist aus Methylmethacrylat, Butylacrylat und Methacrylsäure oder einer Mischung die zwei oder alle drei der vorstehend genannten Komponenten umfasst. Ganz besonders zweckmäßige Zusammensetzungen umfassen als Komponente A) ein Copolymerisat, welches Methylmethacrylat, Butylacrylat und Methacrylsäure umfasst, und zwar im Verhältnis von 55 : 44 : 1 bis 45 : 54 : 1, bezogen auf die Summe der Gewichte der drei genannten Bestandteile von A) zu 100 Gewichtsprozent.

Die (Meth)acrylester-(Co)polymerisate A) können durch (Co)polymerisation der monomeren Komponenten unter Verwendung der üblichen Polymerisationsinitiatoren sowie gegebenenfalls von Reglern hergestellt werden, wobei man bei den üblichen Temperaturen in Substanz, in Emulsion, z. B. in Wasser oder flüssigen Kohlenwasserstoffen oder in Lösung polymerisiert. Vorzugsweise werden Polymerisate A) durch Emulsionspolymerisation erhalten. Die Polymerisate in wässriger Emulsion sind dann unmittelbar für die Konfektionierung weiter verarbeitbar. Sofern man die Polymerisate A) in Substanz oder Lösung herstellt, kann man die Polymerisate isolieren und dann nach gegebenenfalls sich anschließender Reinigung zu einer wässrigen Dispersion konfektionieren.

Sofern man zur Herstellung der Komponente A) die Lösungspolymerisation einsetzt, kann es von Vorteil sein, insbesondere in Lösungsmitteln eines Siedebereichs von 50 bis 150°C, vorzugsweise von 60 bis 12O°C unter Verwendung der üblichen Mengen an Polymerisationsinitiatoren, die im allgemeinen bei 0,01 bis 10, insbesondere bei 0,1 bis 4 Gew.-%, bezogen auf das Gesamtgewicht der Monomeren liegt, zu polymerisieren. Als Lösungsmittel kommen insbesondere Alkohole, wie Methanol, Ethanol, n- und isoPropanol, n- und iso-Butanol, vorzugsweise Isopropanol und/oder Isobutanol sowie Kohlenwasserstoffe wie Toluol und insbesondere Benzine eines Siedebereichs von 60 bis 120' C in Frage. Ferner können Ketone, wie Aceton, Ethylethylketon und Ester, wie Essigsäureethylester sowie Gemische von Lösungsmitteln der genannten Art eingesetzt werden, wobei Gemische, die Isopropanol und/oder Isobutanol in Mengen von 5 bis 95, insbesondere von 10 bis 80, vorzugsweise von 25 bis 60 Gew.-%, bezogen auf das eingesetzte Lösungsgemisch, enthalten, vorgezogen werden.

Als Polymerisationsinitiatoren kommen bei der Lösungspolymerisation beispielsweise 2,2'-Azobisisobutyronitril, Acylperoxide, wie Benzoylperoxid, Dilauroylperoxid, Didecanoylperoxid und Isononanoylperoxid, Alkylperester wie tert.-Butylperpivalat, tert.-Butyl-per-2-ethylhexanoat, tert.-Butyl-per-maleinat, tert.-Butylper-isononanoat und tert.-Butylperbenzoat, Dialkylperoxide wie Dicumylperoxid, tert.-Butylperoxid, Di-tert.-Butylperoxid und Peroxidicarbonate, wie Dimystril-Peroxidicarbonat, Bicetylperoxidicarbonat, Bis(4-tert.-Butyl-cyclohexyl)peroxidicarbonat, Dicyclohexylperoxidicarbonat und Di-2-ethylhexyl-peroxidicarbonat, Hydroperoxide wie Cumolhydroperoxid und tert.-Butylhydroperoxid und Polymerisationsinitiatoren wie 3,4-Dimethyl-3,4-diphenylhexan und 2,3-Dimethyl-2,3-diphenylbutan, in Frage. Als Polymerisationsinitiatoren besonders bevorzugt sind Ketonperoxide, wie Methylethylketonperoxid, Acetylacetonperoxid, Cyclohexanonperoxid und Methylisobutylketonperoxid.

Nach der Polymerisation in Lösung können die Lösungsmittel gegebenenfalls unter vermindertem Druck abgetrennt werden, wobei man bei erhöhten Temperaturen, beispielsweise im Bereich von 100 bis 150* C arbeitet. Die Polymerisate und Copolymerisate können dann in lösungsmittelfreiem Zustand in Wasser dispergiert werden

In manchen Fallen ist es auch von Vorteil, die Polymerisate und Copolymerisate durch Polymerisation in Substanz, d.h. ohne Mitverwendung eines Lösungsmittels, herzustellen, wobei man chargenweise oder auch kontinuierlich, z.B. nach den Angaben der US-PS 4 042 768, arbeiten kann.

Wie bereits erwähnt ist es für die Erfindung besonders bevorzugt, die Polymerisate und Copolymerisate direkt in wässriger Dispersion durch Emulsionspolymerisation herzustellen.

Die Vorgehensweise bei der Emulsionspolymerisation ist dem Fachmann grundsätzlich geläufig. Zunächst löst man den Emulgator in Wasser. Bei einer bestimmten Konzentration (KMK kritische Mizellkonzentration) des Emulgators bilden sich Mizellen aus, in denen später die Polymerketten wachsen können. Man gibt dann noch das Monomer zu und erzeugt zum Schluss reaktive Radikale. Dies kann dadurch geschehen, dass man einen thermisch zerfallenden Radikalbildner (meist Peroxide oder Azo-Verbindungen) zugibt und die Mischung über dessen Zerfallstemperatur erwärmt. Alternativ kann man Radikale auch ohne thermische Anregung durch photochemische Zersetzung (z. B. Azobisisobutyronitril AIBN) oder geeignete Redoxreaktionen (z. B. zwischen Ammoniumperoxydisulfat und Ascorbinsäure) erzeugen. Zunächst bilden sich kleine Polymerradikale in der Wasserphase, die nach Anlagerung einiger der schweren wasserlöslichen Monomeren eine Affinität zu dem hydrophoben Mizellinneren entwickeln und dahin diffundieren, sodass die Reaktion dann dort fortschreitet. Auch kann ein anfänglich erzeugtes Polymerteilchen Emulgator anlagern und so um sich herum eine Mizelle bilden. In den Mizellen bilden sich dann sog. Latexpartikel. Die Mizellenwand aus Emulgator wirkt im Prinzip wie eine Membran, sodass weitere Monomere in die Mizelle hineindiffundieren können, wodurch die Polymerisation weiter fortschreitet. Weitere Emulgatormoleküle treten hinzu und lassen die Mizellenwand gleichsam mitwachsen. Unter der Voraussetzung, dass Initiator im Überschuss vorhanden ist, kommt die Polymerisation erst zum Erliegen, wenn das Monomer vollständig verbraucht ist.

Bei der Emulsionspolymerisation der Komponente A) können auch übliche Regler in den üblichen Mengen, beispielsweise in Mengen von 0,1 bis 15, vorzugsweise von 2 bis 10 Gew.-%, bezogen auf die Monomeren mitverwendet werden. Derartige Regler sind beispielsweise in Mercaptoverbindungen, wie 2-Mercaptoethanol, 3-Mercaptopropionsäuremethylester, 3-Mercaptopropionsäure, 1,6-Dimercaptohexan, 1 ,9-Dimercaptononan, Kohlenwasserstoffe wie Cumol, Alkohole, wie Isopropanol, Isobutanol oder halogenierte Kohlenwasserstoffe wie Tetrachlorkohlenstoff, Tetrabrommethanol, Chloroform oder Bromoform. Als Regler werden Verbindungen wie 3-Mercaptopropionsäure, 3-Mercapto-1,2-propandiol, 2-Mercaptoethanol, Glycerin und Di- und Triglyceride vorgezogen. Des weiteren können auch Ether, wie Dioxan und Tetrahydrofuran, als Regler verwendet werden.

Die Zusammensetzung der Erfindung weist auf 100 Teile (Gewicht) der Komponente A) 1 bis 400 Teile (Gewicht) einer Komponente B) auf.

Bei der Komponente B) handelt es sich um ein Copolymerisat, welches erhältlich ist durch Polymerisation einer Monomermischung, welche als eine essentielle Monomerkomponente eine oder mehrere Verbindungen a) der allgemeinen Formel (I) umfasst. Der Anteil der Verbindung(en) a) an der Monomermischung zum Erhalt der Komponente B) liegt im Bereich von 0,1 bis 99,9 Gewichtsprozent, bezogen auf das gesamte Gewicht der polymerisierbaren Bestandteile für die Komponente B) (Summe aus a) und b)).

Zweckmäßig liegen die Monomere der Formel (I) in einer Menge im Bereich von 0,5 bis 50 Gewichtsprozent vor, insbesondere in einer Menge im Bereich von 2,0 bis 35,0 Gewichtsprozent und ganz besonders bevorzugt im Bereich von 5,0 bis 30,0 Gewichtsprozent in der Monomermischung vor, jeweils bezogen auf das gesamte Gewicht der polymerisierbaren Bestandteile (Summe aus a) und b)).

Beim Monomer a) handelt es sich um wenigstens eine Verbindung der allgemeinen Formel 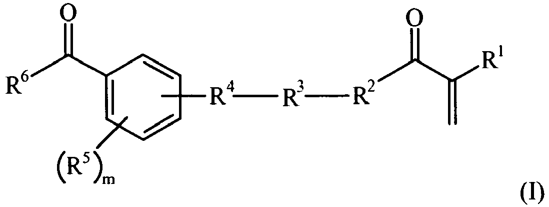
worin R¹ Wasserstoff oder Methyl bedeutet;
R² für Sauerstoff oder NH steht;
R³ für einen Rest der allgemeinen Formel II steht 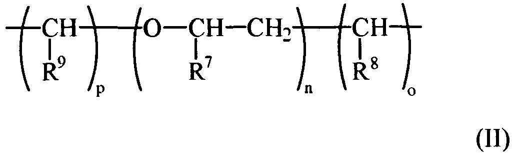 worin
   R⁷, R⁸, R⁹ unabhängig voneinander Wasserstoff oder Methyl sind,
   n eine ganze Zahl von Null bis zweihundert ist,
   o und p unabhängig voneinander eine ganze Zahl von Null bis zwei sind, wobei für den Fall, dass die Summe von n und o und p Null ist, R³ eine Bindung ist;
R⁴ eine Bindung, Sauerstoff, NH, O-CO-O, HN-CO-O, HN-CO-NH oder Schwefel ist;
R⁵ für Wasserstoff, Halogen oder einen eins bis 20 Kohlenstoffatome aufweisenden Rest steht, der gegebenenfalls mit Sauerstoff, Stickstoff und/oder Schwefel substituiert ist, wobei m für eine ganze Zahl von eins bis vier steht; und
R⁶ für Aryl- oder Heterocyclylrest steht, welcher zweckmäßig in Konjugation mit der benachbarten Carbonylgruppe angeordnet ist;

In einer zweckmäßigen Abwandlung des Verfahrens der Erfindung steht der Rest R¹ für eine Methylgruppe.

In einer weiteren besonders bevorzugten Verfahrensvariante setzt man Verbindungen der Formel (I) ein, worin der Rest R² für Sauerstoff steht.

Besonders zweckmäßig sind auch Verbindungen der Formel (I) worin R¹ für eine Methylgruppe und R² für Sauerstoff steht. In dieser Kombination handelt es sich um Methacryloylreste.

Wie an diesem Beispiel gezeigt, soll auch im Verlauf der weiteren Beschreibung die Kombination und Permutation der bevorzugten oder zweckmäßigen Verfahrensvarianten, insbesondere im Hinblick auf den Einsatz der Verbindung der Formel (I) mit besonders bevorzugten und / oder zweckmäßigen Resten mit als zur Erfindung gehörig und offenbart gelten.

In einer weiteren zweckmäßigen Abwandlung des erfindungsgemäßen Verfahrens setzt man Verbindungen der Formel (I) ein, worin R³ und/oder R⁴ so gewählt sind, dass die Anbindung der polymerisierbaren ethylenisch ungesättigten Funktion über Spacer in Form von Ethylenoxid- oder Propylenoxidresten vornimmt. Zu diesem Zwecke ist es bevorzugt, wenn der Rest R³ so gewählt ist, dass die Summe der Indizies n + o + p größer als Null ist. Besonders zweckmäßig werden o und p Null gewählt, während n eine ganze Zahl größer als Null ist, besonders zweckmäßig größer als fünf und noch mehr bevorzugt größer als zehn und insbesondere n eine ganze Zahl zwischen 1 und 20 ist.

In einer zweckmäßigen Variante steht der Rest R⁴ für eine Bindung.

In einer weiteren Ausführungsform ist p = o = Null und n eine ganze Zahl zwischen 1 und 20, wobei zusätzlich R⁷.= Wasserstoff sein kann.

In einer weiteren Ausführungsform ist p = o = n = Null.

In einer weiteren Ausführungsform sind alle R⁵ = Wasserstoff, oder R⁶ = Phenyl.

Die Reste R⁷ bis R⁹ werden in einer zweckmäßigen Variante so gewählt, dass sie allesamt Wasserstoff sind.

Von großem Interesse sind allerdings auch solche Verbindungen der Formel (I), worin die Reste R⁷ bis R⁹ allesamt für Methyl stehen.

Eine besonders günstige Verfahrensvariante erzielt man bei Einsatz von Verbindungen der Formel (I), worin R¹ für Methyl steht, R² für Sauerstoff, R⁴ für eine Bindung, p und o Null sind, R⁷ für Wasserstoff steht und der Index n eine ganze Zahl im Bereich von 1 bis 50, besonders bevorzugt 2 bis 20 und noch mehr bevorzugt 5 bis 10 bedeutet.

Bei R⁵ handelt es sich Wasserstoff, Halogen oder ein bis 20 Kohlenstoffatome aufweisende Reste, die gegebenenfalls mit Sauerstoff, Stickstoff und/oder Schwefel substituiert sind, wobei m für eins bis vier steht.

Besonders zweckmäßige Varianten der Erfindung verwenden Verbindungen der Formel (I) worin alle vier R⁵ für Wasserstoff stehen.

Beim Rest R⁶ handelt es sich um einen Arylrest oder einen Heterocyclylrest. Besonders zweckmäßig ist R⁶ ein Arylrest. Besonders bevorzugt ist R⁶ ein Phenlyrest.

Die Verknüpfung des Reste-Fragmentes -R⁴-R³-R²- mit dem Aromaten kann in o- m - oder p- Position zur Carbonylfunktion am Atomaten erfolgen. Bevorzugt ist die para, also 1-4-Verknüpfung.

In einer besonders zweckmäßigen Abwandlung der Erfindung handelt es sich beim Monomer a) um wenigstens ein Benzophenon(meth)acrylat der allgemeinen Formel (I') 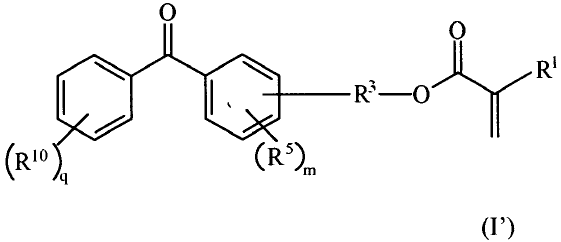 worin R¹, R³ und R⁵ sowie m die oben bei Formel (I) angegebene Bedeutung annehmen können.

R¹⁰ kann unabhängig von R⁵ die Bedeutungen von R⁵ annehmen, nämlich für Wasserstoff, Halogen oder einen eins bis 20 Kohlenstoffatome aufweisenden Rest stehen, der gegebenenfalls mit Sauerstoff, Stickstoff und/oder Schwefel substituiert ist, wobei q für eins bis fünf steht.

Eine ganz besonders bevorzugte Ausführungsform der Erfindung richtet sich auf solche Verfahren, worin als Verbindungen a) solche Verbindungen eingesetzt werden, welche der allgemeinen Formel (I") entsprechen. Hierbei handelt es sich beim Monomer a) um wenigstens ein Benzophenon(meth)acrylat der allgemeinen Formel I" 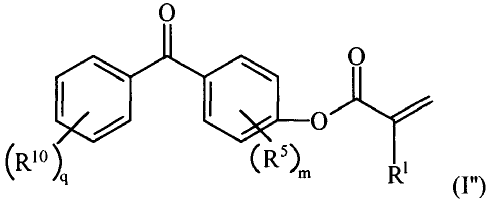 worin R¹, R⁵ und R¹⁰ sowie m und q die bereits bei den Fromeln (I) und (I') angegebenen Bedeutungen besitzen.

Unter Halogen versteht man im Zusammenhang mit den Formeln und Resten hier sowie wenn nicht anders angegeben in der gesamten Beschreibung die Reste Fluor, Chlor, Brom oder Jod.

Zu den Resten, die 1 bis 20 Kohlenstoffatome aufweisen gehören in einer nicht abschließenden Aufzählung unter anderem (C1-C20)-Alkyl, (C2-C20)-Alkenyl, (C2-C20)-Alkinyl, Aryl oder Heterocyclyl, wobei die Aryl- oder Heterocyclyl-Reste unsubstituiert oder mit bis zu drei, im Falle von Fluor auch bis zur Maximalanzahl an gleichen oder verschiedenen Resten versehen sein können und in den genannten Alkyl- , Alkenyl- oder Alkinyl-Resten eine oder mehrere, vorzugsweise bis zu drei nicht benachbarte gesättigte Kohlenstoff-Einheiten durch Heteroatomeinheiten, wie Sauerstoff oder Schwefel ersetzt sein können, und worin darüber hinaus 3 bis 6 Atome dieser gegebenenfalls wie vorstehend modifizierten Kohlenwasserstoff-Reste einen Zyklus bilden können und diese Kohlenwasserstoff-Reste mit oder ohne die angegebenen Variationen, gegebenenfalls mit einem oder mehreren, vorzugsweise bis zu drei, im Falle von Halogen bis zur Maximalanzahl an gleichen oder verschiedenen Resten aus der Reihe Halogen, bevorzugt Fluor, Aryl, Aryloxy, Arylthio, (C3-C8)-Cycloalkoxy, (C3-C8)-Cycloalkylthio, Heterocyclyl, Heterocyclyloxy oder (C1-C2)-Alkoxycarbonyl substituiert sein können, wobei die cycloaliphatischen, aromatischen oder heterocyclischen Ringsysteme unter den soeben genannten Substituenten unsubstituiert oder mit bis zu drei, im Falle von Fluor auch bis zur Maximalanzahl an gleichen oder verschiedenen Substituenten versehen sein können.

Unter dem Ausdruck "(C1-C20)-Alkyl" versteht man einen unverzweigten oder verzweigten Kohlenwasserstoffrest mit 1 bis 20 Kohlenstoffatomen, wie z.B. den Methyl-, Ethyl-, Propyl-, Isopropyl-, 1-Butyl-, 2-Butyl-, 2-Methylpropyl- oder tert.-Butylrest; sowie z.B. den Pentyl-, 2-Methylbutyl-, 1,1-Dimethylpropyl-, Hexyl-, Heptyl-, Octyl-, oder den 1,1,,3 ,3-Tetramethylbutyl-Rest; ,sowie z.B. den Nonyl-, 1-Decyl-, 2-Decyl-, Undecyl-, Dodecyl-, Pentadecyl- oder Eicosyl-Rest;
unter dem Ausdruck "(C2-C20)-Alkenyl" z.B. die Vinyl-, Allyl-, 2-Methyl-2-propenyl- oder 2-Butenyl-Gruppe; sowie z.B. die 2-Pentenyl-, 2-Decenyl- oder die 2-Eicosenyl-Gruppe;
unter dem Ausdruck "(C2-C20)-Alkinyl" beispielsweise die Ethinyl-, Propargyl-, 2-Methyl-2-propinyl oder 2-Butinyl-Gruppe; sowie z.B. die 2-Pentinyl- oder die 2-Decinyl-Gruppe;
unter dem Ausdruck "Aryl" ein isocyclischer aromatischer Rest mit vorzugsweise 6 bis 14, insbesondere 6 bis 12 C-Atomen, wie beispielsweise Phenyl, Naphthyl oder Biphenylyl, vorzugsweise Phenyl.

Unter dem Ausdruck "Aryloxy" versteht man z.B. die Phenoxy- oder 1- oder 2-Naphthyloxy-Gruppe;
unter dem Ausdruck "Arylthio" versteht man z.B. die Phenylthio- oder 1- oder 2-Naphthylthio-Gruppe;
unter dem Ausdruck "(C3-C8)-Cycloalkoxy" eine Cyclopropyl-, Cyclobutyl-, Cyclopentyl-Cyclohexyl-, Cycloheptyl- oder Cyclooctylgruppe, die über einen Sauerstoff verknüpft ist;
und unter dem Ausdruck"(C3-C8)-Cycloalkylthio" eine Cyclopropyl-, Cyclobutyl-, Cyclopentyl- Cyclohexyl-, Cycloheptyl- oder Cyclooctylgruppe, die über ein Schwefelatom verknüpft ist.

Unter dem Ausdruck "Heterocyclyl" versteht man ein heteroaromatisches oder heteroaliphatisches Ringsystem, wobei unter "heteroaromatisches Ringsystem" ein Arylrest, worin mindestens eine CH-Gruppe durch N ersetzt ist und / oder mindestens zwei benachbarte CH-Gruppen durch S, NH oder O ersetzt sind, zu verstehen ist, z.B. ein Rest von Thiophen, Furan, Pyrrol, Thiazol, Oxazol, Imidazol, Isothiazol, Isoxazol, Pyrazol, 1,3,4-Oxadiazol, 1,3,4-Thiadiazol, 1,3,4-Triazol, l,2 ,4-Oxadiazol, l, 2,4-Thiadiatol, l,2 ,4-Triazol, 1,2,3-Triazol, 1,2,3,4-Tetrazol, Benzo[blthiophen, Benzo[blfuran, Indol, Benzo[clthiophen, Benzo[c]furan, Isoindol, Benzoxazol, Benzothiazol, Benzimidazol, Benzisoxazol, Benzisothiazol, Benzopyrazol, Benzothiadiazol, Benzotriazol, Dibenzofuran, Dibenzothiophen, Carbazol, Pyridin, Pyrazin, Pyrimidin, Pyridazin, 1,3,5-Triazin, 1,2,4-Triazin, 1,2,4,5-Triazin, Chinolin, Isochinolin, Chinoxalin, Chinazolin, Cinnolin, 1,8 -Naphthyridin, 1,5-Naphthyridin, 1,6-Naphthyridin, Phthalazin, Pyridopyrimidin, Purin, Pteridin oder 4H-Chinolizin;
unter dem Ausdruck "heteroaliphatisches Ringsystem" einen Cycloalkylrest in dem mindestens eine Kohlenstoff-Einheit durch O, S oder eine Gruppe NR" ersetzt ist und R" Wasserstoff. (C1-C4)-Alkyl oder Aryl bedeutet;
unter dem Ausdruck "Heterocyclyloxy" einen der oben genannten heterocyclischen Reste, die über ein Sauerstoffatom verknüpft sind;
und unter (C1-C2)-Alkoxycarbonyl die Methoxycarbonyl- oder Ethoxycarbonylgruppe.

Wie bereits erwähnt kennzeichnen sich in bevorzugter erfindungsger Ausführungsform die Zusammensetzungen dadurch gekennzeichnet, dass R¹ Methyl ist.

Von besonderem Interesse sind auch Zusammensetzungen, worin R² Sauerstoff ist.

Von besonderem Interesse sind auch Zusammensetzungen, worin R⁴ für eine Bindung steht.

Von besonderem Interesse sind auch Zusammensetzungen, worin p = o = Null und n eine ganze Zahl zwischen 1 und 20 ist. Für diesen fall ist es besonders zweckmäßig, wenn R⁷ = Wasserstoff ist.

Alternativ ist es auch bevorzugt, wenn p= o = n = Null ist.

Von besonderem Interesse sind auch Zusammensetzungen, worin alle R⁵ Wasserstoff sind.

Von besonderem Interesse sind auch Zusammensetzungen, worin R⁶ Phenyl ist.

Ganz besonders zweckmäßig wird als Komponente a) zur Erzeugung eines Polymeren B) für die erfindungsgemäße Zusammensetzung das Methacryloyloxybenzophenon oder Benzophenonmethacrylat eingesetzt.

Die Verbindungen der Formeln (I), (I') und (I") sind entweder käuflich zu erhalten oder werden nach literaturbekannten Verfahren hergestellt. Zu den möglichen Verfahren der Herstellung gehört beispielsweise die Umesterung von (Meth)acrylaten mit den entsprechenden Alkoholen oder Alkoholprecursor-Verbindungen.

Die Monomerzusammensetzung für die Komponente B) umfasst weiterhin ein oder mehrere ethylenisch-ungesättigte Comonomere b), die sich mit a) copolymerisieren lassen, von diesen jedoch verschieden sind. Der Anteil der Comonomere liegt bevorzugt im Bereich von 99,9 bis 0,01 Gew.-%, insbesondere 50,0 bis 99,5, zweckmäßig 65,0 bis 98,0 Gew.-% und besonders bevorzugt 70,0 bis 35,0 Gew.-%, bezogen auf das Gewicht der polymerisierbaren Bestandteile (Summe der Gewichte von a) + b)).

In diesem Zusammenhang geeignete Comonomere b) entsprechen beispielsweise der Formel (III): 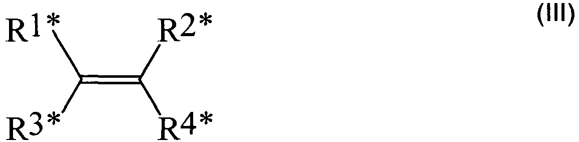 worin R^{1*} und R^{2*} jeweils unabhängig ausgewählt sind aus der Gruppe bestehend aus Wasserstoff, Halogene, CN, lineare oder verzweigte Alkylgruppen mit 1 bis 20, vorzugsweise 1 bis 6 und besonders bevorzugt 1 bis 4 Kohlenstoffatomen, welche mit 1 bis (2n+1) Halogenatomen substituiert sein können, wobei n die Zahl der Kohlenstoffatome der Alkylgruppe ist (beispielsweise CF₃), α, β- ungesättigte lineare oder verzweigte Alkenyl- oder Alkynylgruppen mit 2 bis 10, vorzugsweise von 2 bis 6 und besonders bevorzugt von 2 bis 4 Kohlenstoffatomen, welche mit 1 bis (2n-1) Halogenatomen, vorzugsweise Chlor, substituiert sein können, wobei n die Zahl der Kohlenstoffatome der Alkylgruppe, beispielsweise CH₂=CCl-, ist, Cycloalkylgruppen mit 3 bis 8 Kohlenstoffatomen, welche mit 1 bis (2n-1) Halogenatomen, vorzugsweise Chlor, substituiert sein können, wobei n die Zahl der Kohlenstoffatome der Cycloalkylgruppe ist; Arylgruppen mit 6 bis 24 Kohlenstoffatomen, welche mit 1 bis (2n-1) Halogenatomen, vorzugsweise Chlor, und/oder Alkylgruppen mit 1 bis 6 Kohlenstoffatomen substituiert sein können, wobei n die Zahl der Kohlenstoffatome der Arylgruppe ist; C(=Y*)R^{5*}, C(=Y*)NR^{6*}R^{7*}, Y*C(=Y*)R^{5*}, SOR^{5*}, SO₂R^{5*}, OSO₂R^{5*}, NR^{8*}SO₂R^{5*}, PR^{5*}₂, P(=Y*)R^{5*}₂, Y*PR^{5*}₂, Y*P(=Y*)R^{5*}₂, NR^{8*}₂ welche mit einer zusätzlichen R^{8*}-, Aryl- oder Heterocyclyl-Gruppe quaternärisiert sein kann, wobei Y* NR^{8*}, S oder O, vorzugsweise O sein kann; R^{5*} eine Alkylgruppe mit 1 bis 20 Kohlenstoffatomen, eine Alkylthio mit 1 bis 20 Kohlenstoffatomen, OR¹⁵ (R¹⁵ ist Wasserstoff oder ein Alkalimetall), Alkoxy von 1 bis 20 Kohlenstoffatomen, Aryloxy oder Heterocyklyloxy ist; R^{6*} und R^{7*} unabhängig Wasserstoff oder eine Alkylgruppe mit 1 bis 20 Kohlenstoffatomen sind, oder R^{6*} und R^{7*} können zusammen eine Alkylengruppe mit 2 bis 7 vorzugsweise 2 bis 5 Kohlenstoffatomen bilden, wobei sie einen 3 bis 8-gliedrigen, vorzugsweise 3 bis 6-gliedrigen Ring bilden, und R^{8*} Wasserstoff, lineare oder verzweigte Alkyl- oder Arylgruppen mit 1 bis 20 Kohlenstoffatomen sind;
worin R^{3*} und R^{4*} unabhängig ausgewählt aus der Gruppe bestehend aus Wasserstoff, Halogen (vorzugsweise Fluor oder Chlor), Alkylgruppen mit 1 bis 6 Kohlenstoffatomen und COOR^{9*}, worin R^{9*} Wasserstoff, ein Alkalimetall oder eine Alkylgruppe mit 1 bis 40 Kohlenstoffatomen ist, sind, oder R^{1*} und R^{3*} können zusammen eine Gruppe der Formel (CH₂)_{n'}, welche mit 1 bis 2n' Halogenatomen oder C₁ bis C₄ Alkylgruppen substituiert sein kann, oder der Formel C(=O)-Y*-C(=O) bilden, wobei n' von 2 bis 6, vorzugsweise 3 oder 4 ist und Y* wie zuvor definiert ist; und wobei zumindest 2 der Reste R^{1*}, R^{2*}, R^{3*} und R^{4*} Wasserstoff oder Halogen sind.

Hierzu gehören unter anderem:
Aryl(meth)acrylate, wie Benzylmethacrylat oder
Phenylmethacrylat, wobei die Arylreste jeweils unsubstituiert oder bis zu vierfach substituiert sein können;
Methacrylate von halogenierten Alkoholen, wie
2,3-Dibromopropylmethacrylat,
4-Bromophenylmethacrylat,
1,3-Dichloro-2-propylmethacrylat,
2-Bromoethylmethacrylat,
2-lodoethylmethacrylat,
Chloromethylmethacrylat;
Vinylhalogenide, wie beispielsweise Vinylchlorid, Vinylfluorid, Vinylidenchlorid und Vinylidenfluorid;
Vinylester, wie Vinylacetat;
Styrol, substituierte Styrole mit einem Alkylsubstituenten in der Seitenkette, wie z. B. α-Methylstyrol und α-Ethylstyrol, substituierte Styrole mit einem Alkylsubstitutenten am Ring, wie Vinyltuluol und p-Methylstyrol, halogenierte Styrole, wie beispielsweise Monochlorstyrole, Dichlorstyrole, Tribromstyrole und Tetrabromstyrole;
heterocyclische Vinylverbindungen, wie 2-Vinylpyridin, 3-Vinylpyridin, 2-Methyl-5-vinylpyridin, 3-Ethyl-4-vinylpyridin, 2,3-Dimethyl-5-vinylpyridin, Vinylpyrimidin, Vinylpiperidin, 9-Vinylcarbazol, 3-Vinylcarbazol,
4-Vinylcarbazol, 1-Vinylimidazol, 2-Methyl-1-vinylimidazol, N-Vinylpyrrolidon, 2-Vinylpyrrolidon, N-Vinylpyrrolidin, 3-Vinylpyrrolidin, N-Vinylcaprolactam, N-Vinylbutyrolactam" Vinyloxolan, Vinylfuran, Vinylthiophen, Vinylthiolan, Vinylthiazole und hydrierte Vinylthiazole, Vinyloxazole und hydrierte Vinyloxazole;
Vinyl- und Isoprenylether;
Maleinsäure und Maleinsäurederivate, wie beispielsweise Maleinsäureanhydrid, Methylmaleinsäureanhydrid, Maleinimid, Methylmaleinimid;
Fumarsäure und Fumarsäurederivate;
Acrylsäure und (Meth)acrylsäure;
Diene wie beispielsweise Divinylbenzol.
Hydroxyalkyl(meth)acrylate, wie
3-Hydroxypropylmethacrylat,
3,4-Dihydroxybutylmethacrylat,
2-Hydroxyethylmethacrylat,
2-Hydroxypropylmethacrylat,
2,5-Dimethyl-1,6-hexandiol(meth)acrylat,
1,10-Decandiol(meth)acrylat;
carbonylhaltige Methacrylate, wie
2-Carboxyethylmethacrylat,
Carboxymethylmethacrylat,
Oxazolidinylethylmethacrylat,
N-(Methacryloyloxy)formamid,
Acetonylmethacrylat,
N-Methacryloylmorpholin,
N-Methacryloyl-2-pyrrolidinon,
N-(2-Methacryloyloxyethyl)-2-pyrrolidinon,
N-(3-Methacryloyloxypropyl)-2-pyrrolidinon,
N-(2-Methacryloyloxypentadecyl)-2-pyrrolidinon,
N-(3-Methacryloyloxyheptadecyl)-2-pyrrolidinon;
Glycoldimethacrylate, wie
1,4-Butandiolmethacrylat,
2-Butoxyethylmethacrylat,
2-Ethoxyethoxymethylmethacrylat,
2-Ethoxyethylmethacrylat;
Methacrylate von Etheralkoholen, wie
Tetrahydrofurfurylmethacrylat,
Vinyloxyethoxyethylmethacrylat,
Methoxyethoxyethylmethacrylat,
1-Butoxypropylmethacrylat,
1-Methyl-(2-vinyloxy)ethylmethacrylat,
Cyclohexyloxymethylmethacrylat,
Methoxymethoxyethylmethacrylat,
Benzyloxymethylmethacrylat,
Furfurylmethacrylat,
2-Butoxyethylmethacrylat,
2-Ethoxyethoxymethylmethacrylat,
2-Ethoxyethylmethacrylat,
Allyloxymethylmethacrylat,
1-Ethoxybutylmethacrylat,
Methoxymethyl methacrylat,
1-Ethoxyethylmethacrylat,
Ethoxymethylmethacrylat und ethoxylierte (Meth)acrylate, die bevorzugt 1 bis 20, insbesondere 2 bis 8 Ethoxygruppen aufweisen;
Aminoalkyl(meth)acrylate und Aminoalkyl(meth)acrylatamide, wie N-(3-Dimethylaminopropyl)methacrylamid,
Dimethylaminopropylmethacrylat,
3-Diethylaminopentylmethacrylat,
3-Dibutylaminohexadecyl(meth)acrylat;
Nitrile der (Meth)acrylsäure und andere stickstoffhaltige Methacrylate, wie N-(Methacryloyloxyethyl)diisobutylketimin,
N-(Methacryloyloxyethyl)dihexadecylketimin,
Methacrytoylamidoacetonitril,
2-Methacryloyloxyethylmethylcyanamid,
Cyanomethylmethacrylat;
heterocyclische (Meth)acrylate, wie
2-(1-Imidazolyl)ethyl(meth)acrylat,
2-(4-Morpholinyl)ethyl(meth)acrylat und
1-(2-Methacryloyloxyethyl)-2-pyrrolidon;
Oxiranylmethacrylate, wie
2,3-Epoxybutylmethacrylat,
3,4-Epoxybutylmethacrylat,
10,11-Epoxyundecylmethacrylat,
2,3-Epoxycyclohexylmethacrylat,
10,11-Epoxyhexadecylmethacrylat; sowie
Glycidylmethacrylat;

Zu besonders geeigneten Comonomeren b) gehören unter anderem Methacrylate, Acrylate, Styrole und Mischungen, die zwei oder mehr Komponenten der vorgenannten Gruppen umfassen. Beispiele für (Meth)acrylate sind Methyl(meth)acrylat, Ethyl(meth)acrylat, Propyl(meth)acrylat, Isopropyl(meth)acrylat, Butyl(meth)acrylat, Isobutyl(meth)acrylat, Hexyl(meth)acrylat, Ethylhexyl(meth)acrylat, Cyclohexyl(meth)acrylat, Tetrahydrofurfuryl(meth)acrylat, Isobornyl(meth)acrylat, Benzyl(meth)acrylat, Phenyl(meth)acrylat, Phenylethyl(meth)acrylat), 3,3,5-Trimethylcyclohexyl(meth)acrylat, Hydroxethyl(meth)acrylat, Hydroxypropyl(meth)acrylat, Methyl- oder Ethyltriglykolmethacrylat, Butyldiglykolmethacrylat, Ethylenglykoldi(meth)acrylat sowie Diethylenglykoldi(meth)acrylat, Triethylenglykoldi(meth)acrylat und deren höheren Homologe, Dipropylenglykoldi(meth)acrylat, Tripropylenglykoldi(meth)acrylat und deren höheren Homologe,1,3- und 1,4-Butandioldi(meth)acrylat, 1,6-Hexandioldi(meth)acrylat, 1,12-Dodecandioldi(meth)acrylat, Glycerindi(meth)acrylat, Trimethylolpropantri(meth)acrylat, Trimethylolpropandi(meth)acrylat, Tri(meth)acrylat eines ethoxilierten Trimethylolpropan mit 3 - 10 Mol Ethylenoxid, Di(meth)acrylat eines ethoxilierten Bisphenol-A mit 2 - 20 Mol Ethylenoxid, bevorzugt 2-10 Mol Ethylenoxid und / oder einem Polyethylenglykoldimethacrylat mit 1 - 15 Ethylenoxid-Einheiten und Allyl(meth)acrylat. Weitere Beispiele sind (Meth)acrylsäure, (Meth)acrylamid, N-Methylol(meth)acrylamid, Monoester der Malein- und Bernsteinsäure mit Hydroxyethylmethacrylat und der Phosphorsäureester von Hydroxyethyl(meth)acrylat, deren Anteil meist untergeordnet ist.

Es versteht sich ferner, dass zur Erzeugung eines Polymerisats B) auch mehrere Sorten von Monomeren b) einsetzbar sind. So kann die Komponente B) auch durch Polymerisation von zwei oder mehreren voneinander verschiedenen Monomeren der Sorte b) erhalten werden.

Von besonderem Interesse für die Erfindung ist es, wenn die Komponente b) aus (Meth)acrylatmonomeren ausgewählt ist. Hierbei ist es ganz besonders bevorzugt, dass die Komponente b) Methylmethacrylat ist.

In einer weiteren Ausführungsform ist es bevorzugt, dass die Komponente b) n-Butylmethacrylat aufweist.

Besondere erfindungsgemäße Polymere sind auch erhältlich unter Einsatz einer Komponente b) die ausgewählt ist aus (Meth)acrylaten mit 3 bis 5 Kohlenstoffatomen in der Estergruppe. Hierzu zählen unter anderem Propylmethacrylat, n-Butylmethacrylat, ter.-Butylmethacrylat und n-Pentylmethacrylat. Von den genannten Monomeren ist n-Butylmethacrylat besonders bevorzugt.

Besondere erfindungsgemäße Polymere sind ebenfalls dadurch ausgezeichnet, dass b) eine Mischung von Monomeren ist aufweisend Methylmethacrylat und n-Butylmethacrylat.

Ganz besonders bevorzugte Zusammensetzungen der Erfindung sind dadurch gekennzeichnet, dass die Komponente b) ausgewählt ist aus Methylmethacrylat, Butylacrylat und Methacrylsäure oder einer Mischung die zwei oder alle drei der vorstehend genannten Komponenten umfasst.

Noch mehr bevorzugte Zusammensetzungen resultieren, wenn b) Methylmethacrylat, Butylacrylat und Methacrylsäure umfasst, besonders zweckmäßig im Verhältnis von 55 : 44 : 1 bis 45 : 54 : 1, bezogen auf die Summe der Gewichte der drei genannten Bestandteile von b) zu 100 Gewichtsprozent.

Die in der erfindungsgemäßen Zusammensetzung enthaltenen Polymeren B) werden generell wie auch die Polymerisate A) durch radikalische Polymerisation erhalten. Die übliche freie radikalische Polymerisation ist unter anderem in Ullmanns' Encyclopedia of Industrial Chemistry, Sixth Edition ausführlich beschrieben.

Im Rahmen der vorliegenden Erfindung wird die Polymerisation unter Verwendung mindestens einen Polymerisationsinitiators für die radikalische Polymerisation gestartet. Hierzu gehören unter anderem die in der Fachwelt weithin bekannten Azoinitiatoren, wie 2,2'-Azobisisobutyronitril, 2,2'-Azobis-(2,4-dimethylvaleronitril) und 1,1-Azobiscyclohexancarbonitril, organische Peroxide, wie Dicumylperoxid, Diacylperoxide, wie Dilauroylperoxid, Peroxydicarbonate, wie Diisopropylperoxydicarbonat, Perester, wie tert. Butylperoxy-2-ethylhexanoat, und dergleichen.

Für die Zwecke der vorliegenden Erfindung ganz besonders geeignete Polymerisationsinitiatoren umfassen insbesondere die folgenden Verbindungen: Methylethylketonperoxid,
Acetylacetonperoxid,
Dilauroylperoxid,
tert.-Butylper-2-ethylhexanoat,
Ketonperoxid,
tert-Butylperoctoat,
Methylisobutylketonperoxid,
Cyclohexanonperoxid,
Dibenzoylperoxid,
tert.-Butylperoxybenzoat,
tert.-Butylperoxyisopropylcarbonat,
2,5-Bis-(2-ethylhexanoyl-peroxy)-2,5-dimethylhexan,
tert.-Butylperoxy-2-ethylhexanoat,
tert.-Butylperoxy-3,5,5-trimethylhexanoat,
Dicumylperoxid,
1,1-Bis-(tert.-butylperoxy)-cyclohexan,
1,1-Bis-(tert.-butylperoxy)-3,3,5-trimethylcyclohexan,
Cumylhydroperoxid,
tert.-Butylhydroperoxid,
Bis-(4-tert.-butylcyclohexyl)-peroxydicarbonat,
2,2'-Azobisisobutyronitril,
2,2'-Azobis-(2,4-dimethylvaleronitril),
1,1-Azobiscyclohexancarbonitril,
Diisopropylperoxydicarbonat,
tert. Amylperoxypivalat,
Di-(2,4-dichlorbenzoyl)-peroxid,
tert. Butylperoxypivalat,
2,2'-Azobis-(2-amidinopropane)-dihydrochlorid,
Di-(3,5,5-trimethyl-hexanoyl)-peroxid,
Dioctanoylperoxid,
Didecanoylperoxid,
2,2'-Azobis-(N,N'-dimethylenisobutyramidin)
Di-(2-methylbenzoyl)-peroxid,
Dimethyl-2,2'-azobisisobutyrat,
2,2'Azobis-(2-methylbutyronitril),
2,5-Dimethyl-2,5-di-(2-ethylhexanoylperoxy)-hexan,
4,4'-Azobis-(cyanopentansäure)
Di-(4-methylbenzoyl)-peroxid,
Dibenzoylperoxid,
tert. Amylperoxy-2-ethylhexanoat,
tert. Butylperoxy-2-ethylhexanoat,
tert. Butylperoxy-isobutyrat
sowie Mischungen der zuvor genannten Polymerisationsinitiatoren.

Die erfindungsgemäßen Polymeren können in Substanz oder auch in Lösung erhalten werden. Bevorzugt jedoch ist ihr Erhalt durch Polymerisation nach dem bereits weiter oben im Zusammenhang mit der Komponente A) ausführlicher beschriebenen Emulsionspolymerisation.

Die Polymerisation zur Herstellung der Polymeren B) kann entweder in An- oder Abwesenheit eines Kettenüberträgers durchgeführt werden. Bevorzugt wird die Polymerisation in Anwesenheit eines Kettenüberträgers oder so genannten Reglers durchgeführt. Als Kettenüberträger können typische, für radikalische Polymerisationen beschriebene Spezies eingesetzt werden, wie sie bereits weiter oben beschrieben wurden.

Insbesondere empfiehlt sich ein Einsatz von Mercaptanen, wie beispielsweise n-Butylmercaptan, n-Dodecylmercaptan, 2-Mercaptoethanol, 2-Ethylhexylthioglycolat oder Pentaerythrittetrathioglycolat; wobei der Kettenüberträger vorzugsweise in Mengen von 0,05 bis 5,0 Gew.-%, bevorzugt in Mengen von 0,1 bis 2,0 Gew.-% und besonders bevorzugt in Mengen von 0,2 bis 1,0 Gew.-%, jeweils bezogen auf die Gesamtmasse der ethylenisch-ungesättigten Verbindungen, eingesetzt wird. In diesem Zusammenhang kann der Fachmann der Fachliteratur, insbesondere den Druckschriften H. Rausch-Puntigam, T. Völker "Acryl- und Methacrylverbindungen" Springer, Heidelberg, 1967; Houben-Weyl "Methoden der organischen Chemie" Bd. XIV/1, S. 66ff., Georg Thieme, Heidelberg, 1961 und Kirk-Othmer "Encyclopedia of Chemical Technology" Vol. 1, S. 296ff., J. Wiley, New York, 1978, entnehmen. Im Rahmen der vorliegenden Erfindung wird die Verwendung von 2-Ethylhexylthioglycolat oder Pentaerythrittetrathioglycolat als Kettenüberträger oder Regler ganz besonders bevorzugt. Diese werden in einer bevorzugten Ausführungsform in einer Menge von 0,05 bis 5 Gew.-% eingesetzt, bezogen auf die Gesamtmasse der Komponenten a) und b)..

Das Molekulargewicht der Benzophenon(meth)acrylat-haltigen Copolymeren vom Typ B) kann über einen weiten Bereich variieren. Im Rahmen der vorliegenden Erfindung wählt man die Mengen an Monomeren, Polymerisationsinitiator, Kettenüberträger und gegebenenfalls Lösungsmittel vorzugsweise derart, dass ein Gewichtsmittel des Molekulargewichtes im Bereich von 10³ und 10⁶ g/mol, bevorzugt im Bereich von 10⁴ bis kleiner als 10⁶ g/mol, zweckmäßigerweise im Bereich von 2x10⁴ bis kleiner als 10⁶ g/mol, insbesondere im Bereich von 5x10⁴ bis kleiner als 10⁶ g/mol erhalten wird. Besonders bevorzugt sind Molekulargewichte im Bereich von 10⁵ bis 10⁶ g/mol. Diese Werte beziehen sich jeweils auf das Gewichtsmittel des Molekulargewichts (Mw).

Die Molekulargewichte können nach bekannten Methoden bestimmt werden. Beispielsweise kann die Gelpermeationschromatographie, auch bekannt unter "Size Exclusion Chromatography" (SEC) eingesetzt werden. Ebenso ist ein osmometrisches Verfahren, wie beispielsweise die "Vapour Phase Osmometry" zur Bestimmung der Molekulargewichte einsetzbar. Die genannten Verfahren sind beispielsweise beschrieben in: P.J. Flory, "Principles of Polymer Chemistry" Cornell University Press (1953), Chapter VII, 266-316 sowie "Macromeolecules, an Introduction to Polymer Science", F.A. Bovey and F.H. Winslow, Editors, Academic Press (1979), 296-312 sowie W.W. Yau, J.J. Kirkland and D.D. Bly, "Modern Size Exclusion Liquid Chromatography, John Wiley and Sons, New York, 1979. Bevorzugt wird zur Bestimmung der Molekulargewichte der hierin vorgestellten Polymere die Gelpermeationschromatographie eingesetzt. Es sollte bevorzugt gegen Polymethylacrylat- oder Polyacrylat-Standards gemessen werden.

Die Polymerisation zum Erhalt der erfindungsgemäßen Polymere kann bei Normaldruck, Unter- oder Überdruck durchgeführt werden. Auch die Polymerisationstemperatur ist unkritisch. Im Allgemeinen liegt sie jedoch im Bereich von -20° - 200°C, vorzugsweise im Bereich von 0° - 180°C, günstigerweise im Bereich von 50° - 180°C, besonders bevorzugt im Bereich von 50° - 130°C, und insbesondere im Bereich von 60° - 120°C.

Die Polymerisation wird vorzugsweise bei einer konstanten Reaktionstemperatur durchgeführt, welche während der gesamten Polymerisationsreaktion vorzugsweise um weniger als +-20 °C, besonders bevorzugt um weniger als +-10 °C, insbesondere um weniger als +- 5°C, um die gewünschte Temperatur schwankt.

Zu diesem Zweck wird das Polymerisationsgefäß vorzugsweise mit einem Medium umgeben, welches die entstehende Polymerisationswärme möglichst rasch und gut abführen kann. Zur weiteren Verringerung von Temperaturschwankungen hat es sich als überaus günstig erwiesen, die Temperatur im Polymerisationsgefäß durch die Zugabegeschwindigkeit des Polymerisationsinitiators zu steuern, indem man zur Temperaturerhöhung die Zugabegeschwindigkeit des Polymerisationsinitiators kurzzeitig erhöht und zur Temperaturverringerung die Zugabegeschwindigkeit des Polymerisationsinitiators kurzzeitig erniedrigt.

Weiterhin wird günstiger Weise derart verfahren, dass man die die ethylenisch-ungesättigten Verbindungen umfassende Reaktionsmischung in einem Reaktionsgefäß vorlegt, die Reaktionsmischung unter Verwendung eines geeigneten Temperiermediums bei der gewünschten 15 Polymerisationstemperatur solange temperiert, bis die Reaktionsmischung die gewünschte Polymerisationstemperatur aufweisen, die Polymerisation durch Zugabe oder Zudosierung des Polymerisationsinitiators startet und direkt nach der Zugabe oder direkt nach dem Beginn der Zudosierung des Polymerisationsinitiators die Temperatur des Temperiermediums 20 gegenüber der zuvor eingestellten Temperatur, vorzugsweise um 2 bis 10 "C, insbesondere um 5 bis 10 "C, erniedrigt.

Die erfindungsgemäßen Zusammensetzungen weisen je nach Anwendungsbereich auf 100 Gewichtsteile an Polymerisat A) etwa 1 bis 400 Gewichtsteile Polymerisat B) auf, wobei sich die Mengenangaben auf den Feststoffgehalt der Dispersion beziehen. Von besonderem Vorteil sind Zusammensetzungen die auf 100 Teile A) etwa 100 Teile bis 350 Teile (w/w) an Komponente B) enthalten. Diese eignen sich ausgezeichnet als Schutzüberzüge für mineralische Substrate. Ganz besonders zweckmäßig sind Zusammensetzungen, die auf 100 Teile A) 200 bis 300 Teile B) aufweisen.

Die Zusammensetzungen der Erfindung lassen sich durch übliche Konfektionierung oder Modifizierung weiter an verschiedene Anwendungsbereiche anpassen. Beispielsweise können übliche klebrigmachende Harze, z.B. Kohlenwasserstoffharze, gegebenenfalls modifizierte Kollophoniumharze, Terpenphenolharze, Ketonharze, Aldehydharze oder Homopolymerisate, wie Poly-2-ethylhexylacrylat und Poly-n-butylacrylat, ferner Weichmacher, z.B. auf Basis von Mono-, Di- oder Polyesterverbindungen, polychlorierten Kohlenwasserstoffen oder Paraffinölen, Farbstoffe und Pigmente, oder Stabilisatoren oder kautschukelastische Stoffe, wie Natur- oder Synthesekautschuk, Polyvinylether sowie ferner Polybutadienöle, zugesetzt werden. Zur Modifizierung kommen auch ein- oder mehrfach olefinisch ungesättigte höhermolekulare Verbindungen in Betracht, wie mit Acrylsäure veresterte Polyesterole und Polyetherole wie Tripropylenglykol-acrylat, Tetraethylenglykol-acrylat, Polyethylenglykoldiacrylat und Polytetrahydrofuran. Geeignet sind außerdem Diacrylate und Dimethacrylate von Poly-tetrahydrofuran mit Molekulargewichten von meist 250 bis 2000 (Zahlenmittel). Derartige mindestens diolefinisch ungesättigte Verbindungen können mit Vorteil in Mengen von 0,1 bis 10 Gew.-%, bezogen auf das gewicht des Feststoffanteils der Zusammensetzung eingesetzt werden, wobei diolefinisch ungesättigte Verbindungen dieser Art mit einem Molekulargewicht (Zahlenmittel) von mindestens 500 von besonderem Interesse sind.

Die Zusammensetzungen eignen sich insbesondere in Form von wässrigen Dispersionen zur Herstellung von Überzügen, Beschichtungen und Imprägnierungen, beispielweise auch zur Fertigung von Haftklebern, Haftklebefolien und Haftklebeetiketten sowie Prägezangenfolien. Besonders bevorzugte Anwendungsgebiete jedoch sind Beschichtungen von mineralischen Substraten wie Betonen, insbesondere von Fußböden Dabei können die Zusammensetzungen in an sich üblicher Weise durch Streichen, Spritzen, Walzen, Rakeln oder Gießen, gegebenenfalls bei erhöhter Temperatur - meist im Temperaturbereich von 20 bis 150' C - auf übliche Substrate aufgebracht werden, beispielsweise auf Glas, Beton, Ziegel, Stein, Papier, Pappe, Holz, Metalle und Kunststofffolien, z.B. aus weichgemachtem PVC, Polyethylen, Polyamiden, Polyethylenglykolterephthalat oder Aluminium sowie Polypropylen.

Das in der wässrigen Dispersion enthaltene Wasser kann von den Überzügen leicht, gegebenenfalls bei Raumtemperatur oder wenig erhöhten Temperaturen, im allgemeinen bei Temperaturen von 20 bis 150, vorzugsweise von 50 bis 80°C abgedampft werden, wobei in an sich üblicher Weise Heizstrahler oder Warmluftwälzvorrichtungen eingesetzt werden. Die gegebenenfalls getrockneten oder vorgetrockneten Aufträge können anschließend durch Bestrahlen mit UV-Licht vernetzt werden, wobei man gut haftende Überzüge erhält, die eine hohe Kohäsion und eine gute Schälfestigkeit bei vorzüglicher Alterungsbeständigkeit aufweisen. Dabei braucht nicht unter Inertgasatmosphäre bestrahlt zu werden, man kann vielmehr an der Luft arbeiten. Als UV-Strahler können die üblichen Strahler z.B. Quecksilberdampf-nieder-, - mittel- und -hochdrucklampen eingesetzt werden, die Leistungen von z.B. 80 bis 160 Watt/cm haben können. Dabei
ermöglichen Lampen mit höherer Leistung im Allgemeinen eine schnellere Vernetzung. In manchen Fällen kann bei der vernetzenden Bestrahlung gleichzeitig durch den IR-Anteil der Lampen restliches Lösungsmittel
oder Wasser entfernt werden.

Ganz besonders vorteilhaft ist die Verwendung der Zusammensetzung nach der Erfindung zur Herstellung UV-härtbarer Überzüge, Beschichtungen und Imprägnierungen, insbesondere zur Beschichtung von mineralischen Substraten und hierbei ganz besonders zweckmäßig zur Beschichtung von Beton, vor allem von Betonböden. In einer weiteren Ausführungsform der Erfindung sind besonders Mischungen der vorgenannten Dispersionen mit anderen Dispersionen, deren Feststoffe von den erfindungsgemäßen Dispersionen verschieden sind, zweckmäßig. Hierbei werden vorteilhaft die Eigenschaften der bekannten Dispersionen aufgewertet, beispielsweise hinsichtlich der mechanischen Beständigkeit und dergleichen mehr. Besonders zweckmäßig sind Mischungen von Dispersionen, die bezogen auf das Gewicht des Trockenanteils der Dispersion in einem Mengenverhältnis (w / w) von 1 : 99 bis 99 : 1 vorliegen.

Besonders vorteilhafte Abmischungen resultieren, wenn die erfindungsgemäße Dispersion (Benzophenon-Dispersion) mit einkomponentigen aliphatischen Polyurethandispersionen, wässrigen Dispersionen mit modifizierten Acrylatcopolymeren (z.T. mit anionischen und kationischen funktionellen Gruppen) und / oder Wachsemulsionen (z.B. Ethylen-Copolymer-Emulsionen) abgemischt verwendet werden. In allen Fällen gelingt es bereits mit geringen Zusätzen einer erfindungsgemäßen Dispersion, beispielsweise im Bereich von 1 bis 50 Gewichtsteilen, bezogen auf den Feststoffgehalt der Dispersion, zu 100 Gewichtsteilen, ebenfalls bezogen auf den Feststoffgehalt, der von den erfindungsgemäßen Dispersionen verschiedenen Dispersion, die mechanischen Eigenschaften der anderen Dispersionen dramatisch aufzuwerten. Besonders zweckmäßig sind Verwendungen, bei denen die Zusatzmenge im Bereich von 2 bis 50 Gewichtsteilen liegt. Noch mehr bevorzugt werden 3 bis 30 Gewichtsteile zugemischt. Ganz besonders vorteilhaft ist der Einsatz von Mengen im Bereich von 4 bis 25, noch mehr bevorzugt im Bereich von 5 bis 20 Gewichtsteilen.

Die nachfolgenden Beispiele und Vergleichsbeispiele dienen zur weiteren Erläuterung der Erfindung

### Herstellung der Emulsionspolymerisate

Alle Emulsionspolymerisate wurden im Zulaufverfahren hergestellt.

### Beispiel 1

Zunächst wurden in einem PE-Becherglas 468,3 g Butylacrylat (BA), 490,0 g Methylmethacrylat (MMA), 32,75 g Methacryloyloxybenzophenon, 10 g Methacrylsäure (MAS), 1,8 g Ammonium-peroxodisulfat (APS), 6,67 g Disponil FES 32 (30 %ig) und 613,2 g Wasser mittels Ultra-Turrax 3 Minuten bei 4000 UpM emulgiert.

In einem Glasreaktor, der mit einem Wasserbad temperiert werden konnte und mit einem Blattrührer ausgestattet war, wurden 390 g Wasser und 0,833 g Disponil FES 32 (30 %ig) vorgelegt, auf 80°C erhitzt und mit 0,2 g Ammoniumperoxodisulfat (APS) gelöst in 10 g Wasser versetzt. 5 Minuten nach der APS-Zugabe wurde hierzu die zuvor hergestellte Emulsion innerhalb 240 Minuten (Intervall: 3 Minuten Zulauf, 4 Minuten Pause, 237 Minuten Restzulauf) zudosiert.

Nach Zulaufende wurde 1 Std. bei 80°C nachgerührt. Danach wurde auf Raumtemperatur abgekühlt und die Dispersion über VA-Siebgewebe mit 0,09 mm Maschenweite abfiltriert.

Die hergestellte Emulsion hatte einen Feststoffgehalt von 50 ± 1 %, einen pH-Wert von 3, eine Viskosität von 300 m Pas und einen r_{N5}-Wert von 69 nm.
Nach Zulaufende wurde mit 2,2 g 25%iger Ammoniaklösung neutralisiert und mit 42,86 g 70%iger wässriger Triton X 305-Lösung nachstabilisiert. Die Endneutralisation wurde mit 5,73 g 25%iger Ammoniaklösung vorgenommen.

Die Bestimmung des Teilchenradius erfolgte durch PCS (Photon Correlation Spektroscopy), wobei sich die angegebenen Daten auf den r50-Wert beziehen (50% der Teilchen sind kleiner, 50% sind größer). Hierzu wurde ein Beckman Coulter N5 Submicron Particle Size Analyzer eingesetzt.

Die Eigenschaften des so erhaltenen Beschichtungsmittels wurden anhand von unterschiedlichen Verfahren untersucht. Hierzu wurden an getrockneten Filmen Versuche zur Lösungsmittelbeständigkeit und der Härte durchgeführt.

Die Bestimmung der Lösungsmittelbeständigkeit erfolgte unter Verwendung von Methylisobutylketon (MIBK), wobei eine Probe mit MIBK bei Raumtemperatur 4 Stunden gequollen wurde. Anschließend wurde die Probe aus dem Lösungsmittel genommen und überschüssiges Lösungsmittel entfernt. Anschließend wurde die Probe 1 Stunde bei ca. 140°C getrocknet. Aus dem Gewichtsverlust errechnet sich der durch das Lösungsmittel entfernte Anteil der Probe.

Die erhaltenen Ergebnisse sind in Tabelle 1 aufgeführt.

Zum Vergleich wurden Acryldispersionen untersucht, die keine unter UV vernetzenden Monomere enthalten. Die erhaltenen Ergebnisse sind in Tabelle 1 dargelegt.

### Vergleichsbeispiel 1

Zunächst wurden in einem PE-Becherglas 432 g Butylacrylat (BA), 360 g Methylmethacrylat (MMA), 8 g Methacrylsäure (MAS), 2,4 g Ammoniumperoxodisulfat (APS), 24,0 g Disponil FES 32 (30 %ig) und 718,4 g Wasser mittels Ultra-Turrax 3 Minuten bei 4000 UpM emulgiert.

In einem Glasreaktor, der mit einem Wasserbad temperiert werden konnte und mit einem Blattrührer ausgestattet war, wurden 470 g Wasser und 0,6 g Disponil FES 32 (30 %ig) vorgelegt, auf 80°C erhitzt und mit 0,6 g Ammoniumperoxodisulfat (APS) gelöst in 10 g Wasser versetzt. 5 Minuten nach der APS-Zugabe wurde hierzu die zuvor hergestellte Emulsion innerhalb 240 Minuten (Intervall: 3 Minuten Zulauf, 4 Minuten Pause, 237 Minuten Restzulauf) zudosiert.

Nach Zulaufende wurde 1 Std. bei 80°C nachgerührt. Danach wurde auf Raumtemperatur abgekühlt und die Dispersion über VA-Siebgewebe mit 0,09 mm Maschenweite abfiltriert.
Die hergestellte Emulsion hatte einen Feststoffgehalt von 40 ± 1 %, einen pH-Wert von 8,3 (nach Neutralisation mit 4 g 25%iger Ammoniaklösung), eine Viskosität von 13 mPas und einen r_{N5}-Wert von 97 nm.

An getrockneten Filmen wurden Versuche zur Lösungsmittelbeständigkeit und der mechanischen Stabilität durchgeführt.

### Vergleichsbeispiel 2

Zunächst wurden in einem PE-Becherglas 352 g Butylacrylat (BA), 440 g Methylmethacrylat (MMA), 8 g Methacrylsäure (MAS), 2,4 g Ammoniumperoxodisulfat (APS), 24,0 g Disponil FES 32 (30 %ig) und 718,4 g Wasser mittels Ultra-Turrax 3 Minuten bei 4000 UpM emulgiert.

In einem Glasreaktor, der mit einem Wasserbad temperiert werden konnte und mit einem Blattrührer ausgestattet war, wurden 470 g Wasser und 0,6 g Disponil FES 32 (30 %ig) vorgelegt, auf 80°C erhitzt und mit 0,6 g Ammoniumperoxodisulfat (APS) gelöst in 10 g Wasser versetzt. 5 Minuten nach der APS-Zugabe wurde hierzu die zuvor hergestellte Emulsion innerhalb 240 Minuten (Intervall: 3 Minuten Zulauf, 4 Minuten Pause, 237 Minuten Restzulauf) zudosiert.

Nach Zulaufende wurde 1 Std. bei 80°C nachgerührt. Danach wurde auf Raumtemperatur abgekühlt und die Dispersion über VA-Siebgewebe mit 0,09 mm Maschenweite abfiltriert.
Die hergestellte Emulsion hatte einen Feststoffgehalt von 40 ± 1 %, einen pH-Wert von 8,6 (nach Neutralisation mit 4 g 25%iger Ammoniaklösung), eine Viskosität von 11 mPas und einen r_{N5}-Wert von 90 nm.

An getrockneten Filmen wurden Versuche zur Lösungsmittelbeständigkeit und der mechanischen Stabilität durchgeführt.

### Beispiel 2

Die in den Vergleichsbeispielen 1 und 2 aufgeführten Acrylatdispersionen wurden mit Wasser auf einen Feststoffgehalt von 40 % verdünnt und im Anschluss mit der in Beispiel 1 aufgeführten UV-härtbaren Dispersion in unterschiedlichen Verhältnissen gemischt:

| | |
|---|---|
| 2a | Vgl. 1 mit Bsp. 1 25/75 |
| 2b | Vgl. 1 mit Bsp. 1 50/50 |
| 2c | Vgl. 1 mit Bsp. 1 75/25 |
| 2d | Vgl. 2 mit Bsp. 1 25/75 |
| 2e | Vgl. 2 mit Bsp. 1 50/50 |
| 2f | Vgl. 2 mit Bsp. 1 75/25 |

Die Dispersionsfilme werden mittels Philips UV-Lampe (Intensität 0,9 - 1 mW/cm2) bestrahlt, nach jeweils 0,5 h, 4 h und 24 h werden Proben genommen, untersucht und mit dem Nullwert verglichen.

**Tabelle 1. Eigenschaften der Beschichtungen nach 24 h UV-Bestrahlung**

| **Test** | **Bsp. 1** | **Vgl. 1** | **Vgl. 2** | **Bsp. 2a** | **2b** | **2c** | **2d** | **2e** | **2f** |
|---|---|---|---|---|---|---|---|---|---|
| Quellung in MIBK [%] | 255 | gelöst | gelöst | 902 | 349 | 262 | 843 | 335 | 239 |
| Quellung in Ethanol [%] | 77 | 305 | 169 | 140 | 113 | 84 | 107 | 93 | 87 |
| Bruchdehnung [%] | 148 | 488,3 | - | 425,8 | 210,5 | 196,9 | 163,3 | 162,4 | 168,5 |
| Zugfestigkeit [MPa] | 9,2 | 3,7 | - | 8,8 | 9,6 | 14,9 | 14,3 | 15,3 | 19,6 |

Aus den erhaltenen Ergebnissen erkennt man, dass sowohl die Lösemittelaufnahme in MIBK und Ethanol als auch die Zugfestigkeit im Vergleich zur reinen Acryldispersion deutlich verbessert werden.

Von besonderem Interesse ist auch, dass eine für Bodenbeschichtungen ausgelegte, fertige Dispersion in Mischung mit einer erfindungsgemäßen Dispersion enthaltend eine oder eine Mehrzahl von verbindungen der Formel (I), vorzugsweise ein oder eine Mehrzahl von Benzophenon(meth)acrylaten, abgemischt werden kann und die Blends deutliche Vorteile gegenüber der reinen, ungemischten Dispersion zeigen.

## Patentansprüche

1. Zusammensetzung aufweisend in wässriger Dispersion
A) auf 100 Gewichtsteile eines oder einer Mehrzahl von (Meth)acrylatpolymeren;
B) 1 - 400 Gewichtsteile eines oder einer Mehrzahl von (Meth)acrylatpolymeren, die eine oder eine Mehrzahl der Verbindungen der allgemeinen Formel (I) einpolymerisiert enthalten und die von den unter A) genannten (Meth)acrylatpolymeren verschieden sind, und die erhältlich sind durch Emulsionspolymerisation einer Mischung aufweisend
a) 0,1 bis 99,9 Gewichtsprozent wenigstens einer Verbindung der allgemeinen Formel (I) 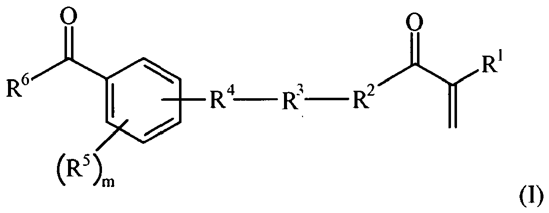
worin R¹ Wasserstoff oder Methyl bedeutet;
R² für Sauerstoff oder NH steht;
R³ für einen Rest der allgemeinen Formel II steht 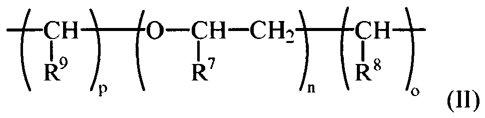 worin
R⁷, R⁸, R⁹ unabhängig voneinander Wasserstoff oder Methyl sind, n eine ganze Zahl von Null bis zweihundert ist,
o und p unabhängig voneinander eine ganze Zahl von Null bis zwei sind, wobei für den Fall, dass die Summe von n und o und p Null ist, R³ eine Bindung ist;
R⁴ eine Bindung, Sauerstoff, NH, O-CO-O, HN-CO-O, HN-CO-NH oder Schwefel ist;
R⁵ für Wasserstoff, Halogen oder einen eins bis 20 Kohlenstoffatome aufweisenden Rest steht, der gegebenenfalls mit Sauerstoff, Stickstoff und/oder Schwefel substituiert ist, wobei m für eine ganze Zahl von eins bis vier steht; und
R⁶ für einen Aryl- oder Heterocyclylrest steht;
und
b) 99,9 bis 0,1 Gew.-% eines oder einer Mehrzahl von a) verschiedener mit a) copolymerisierbarer ethylenisch ungesättigter Monomere, wobei die Komponenten a) und b) zusammen 100 Gew.-% der polymerisierbaren Bestandteile der Mischung ergeben;
und wobei sich die Gewichtsteile von A) und B) auf den Feststoffanteil der Polymeren A) oder B) in der wässrigen Dispersion beziehen.

2. Zusammensetzung nach Anspruch 1, **dadurch gekennzeichnet, dass** R¹ Methyl ist.

3. Zusammensetzung nach Anspruch 1 oder 2, **dadurch gekennzeichnet, dass** R² Sauerstoff ist.

4. Zusammensetzung nach einem der vorhergehenden Ansprüche, **dadurch gekennzeichnet, dass** R⁴ für eine Bindung steht.

5. Zusammensetzung nach einem der vorhergehenden Ansprüche, **dadurch gekennzeichnet, dass** p = o = Null und n eine ganze Zahl zwischen 1 und 20 ist.

6. Zusammensetzung nach Anspruch 5, **dadurch gekennzeichnet, dass** R⁷ = Wasserstoff ist.

7. Zusammensetzung nach einem der Ansprüche 1 bis 4, **dadurch gekennzeichnet, dass** p= o = n = Null ist.

8. Zusammensetzung nach einem der vorhergehenden Ansprüche, **dadurch gekennzeichnet, dass** alle R⁵ Wasserstoff sind.

9. Zusammensetzung nach einem der vorhergehenden Ansprüche, **dadurch gekennzeichnet, dass** R⁶ Phenyl ist.

10. Zusammensetzung nach einem der vorhergehenden Ansprüche, **dadurch gekennzeichnet, dass** die Komponente b) ausgewählt ist aus (Meth)acrylatmonomeren.

11. Zusammensetzung nach Anspruch 10, **dadurch gekennzeichnet, dass** die Komponente b) ausgewählt ist aus Methylmethacrylat, Butylacrylat und Methacrylsäure oder einer Mischung die zwei oder alle drei der vorstehend genannten Komponenten umfasst.

12. Zusammensetzung nach Anspruch 11, **dadurch gekennzeichnet, dass** b) Methylmethacrylat, Butylacrylat und Methacrylsäure umfasst, im Verhältnis von 55 : 44 : 1 bis 45 : 54 : 1, bezogen auf die Summe der Gewichte der drei genannten Bestandteile von b) zu 100 Gewichtsprozent.

13. Zusammensetzung nach einem der vorhergehenden Ansprüche, **dadurch gekennzeichnet, dass** das (Meth)acrylatpolymer A) erhältlich ist durch Copolymerisation von Monomeren ausgewählt aus Methylmethacrylat, Butylacrylat und Methacrylsäure oder einer Mischung die zwei oder alle drei der vorstehend genannten Komponenten umfasst.

14. Zusammensetzung nach Anspruch 13, **dadurch gekennzeichnet, dass** A) Methylmethacrylat, Butylacrylat und Methacrylsäure umfasst, im Verhältnis von 55 : 44 : 1 bis 45 : 54 : 1, bezogen auf die Summe der Gewichte der drei genannten Bestandteile von A) zu 100 Gewichtsprozent.

15. Verwendung der Zusammensetzung nach einem der vorhergehenden Ansprüche 1 bis 14 zur Herstellung UV-härtbarer Überzüge, Beschichtungen und Imprägnierungen.

16. Verwendung der Zusammensetzung nach einem der Ansprüche 1 bis 14 zur Beschichtung von mineralischen Substraten.

17. Verwendung nach Anspruch 16 zur Beschichtung von Beton.

18. Verwendung nach einem der Ansprüche 15 bis 17 in Mischung mit von den Zusammensetzungen gemäß den Ansprüchen 1 bis 14 verschiedenen Dispersionen.

19. Verwendung nach Anspruch 18 in einem Mengenverhältnis (w/w) von 1 : 99 bis 99 : 1, jeweils bezogen auf das Gewicht des Trockenanteils der Dispersion gemäß den Ansprüchen 1 bis 14 sowie der davon verschiedenen Dispersion.

## Claims

1. Composition comprising, in aqueous dispersion,
A) for every 100 parts by weight of a, or of a plurality of, (meth)acrylate polymer(s);
B) from 1 - 400 parts by weight of a, or of a plurality of, (meth)acrylate polymer(s), which contain(s) a, or a plurality of, compound(s) of the general formula (I) copolymerized and which differ(s) from the (meth)acrylate polymers specified in A), where these are obtainable by emulsion polymerization of a mixture comprising
a) from 0.1 to 99.9 percent by weight of at least one compound of the general formula (I) 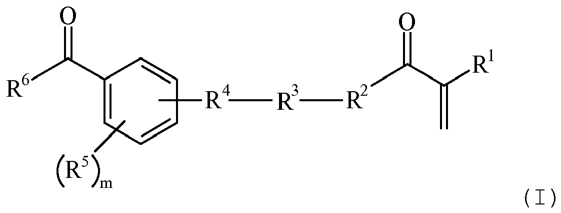
in which R¹ is hydrogen or methyl;
R² is oxygen or NH;
R³ is a moiety of the general formula II 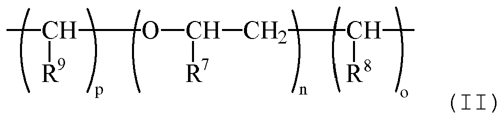 in which
R⁷, R⁸, and R⁹, independently of one another, are hydrogen or methyl,
n is a whole number from zero to two hundred,
o and p, independently of one another, are a whole number from zero to two, where R³ is a bond if the total of n and o and p is zero;
R⁴ is a bond, oxygen, NH, O-CO-O, HN-CO-O, HN-CO-NH or sulphur;
R⁵ is hydrogen, halogen or a moiety having from one to 20 carbon atoms and if appropriate having substitution by oxygen, by nitrogen and/or by sulphur, where m is a whole number from one to four; and
R⁶ is an aryl or heterocyclyl moiety;
and
b) from 99.9 to 0.1% by weight of a, or of a plurality of, ethylenically unsaturated monomer(s) which differ(s) from a) and which is/are copolymerizable with a), where components a) and b) together give 100% by weight of the polymerizable constituents of the mixture;
and where the parts by weight of A) and B) are based on the solids content of the polymers A) or B) in the aqueous dispersion.

2. Composition according to Claim 1, **characterized in that** R¹ is methyl.

3. Composition according to Claim 1 or 2, **characterized in that** R² is oxygen.

4. Composition according to any of the preceding claims, **characterized in that** R⁴ is a bond.

5. Composition according to any of the preceding claims, **characterized in that** p = o = zero and that n is a whole number from 1 to 20.

6. Composition according to Claim 5, **characterized in that** R⁷ = hydrogen.

7. Composition according to any of Claims 1 to 4, **characterized in that** p = o = n = zero.

8. Composition according to any of the preceding claims, **characterized in that** all of the R⁵ are hydrogen.

9. Composition according to any of the preceding claims, **characterized in that** R⁶ is phenyl.

10. Composition according to any of the preceding claims, **characterized in that** component b) has been selected from (meth)acrylate monomers.

11. Composition according to Claim 10, **characterized in that** component b) has been selected from methyl methacrylate, butyl acrylate and methacrylic acid or from a mixture which encompasses two or all three of the abovementioned components.

12. Composition according to Claim 11, **characterized in that** b) encompasses methyl methacrylate, butyl acrylate and methacrylic acid in a ratio of from 55:44:1 to 45:54:1, based on the total of the weights of the three constituents mentioned of b) as 100 percent by weight.

13. Composition according to any of the preceding claims, **characterized in that** the (meth)acrylate polymer A) is obtainable by copolymerization of monomers selected from methyl methacrylate, butyl acrylate and methacrylic acid or of a mixture which encompasses two or all three of the abovementioned components.

14. Composition according to Claim 13, **characterized in that** A) encompasses methyl methacrylate, butyl acrylate and methacrylic acid, in a ratio of from 55:44:1 to 45:54:1, based on the total of the weights of the three constituents mentioned of A) as 100 percent by weight.

15. Use of the composition according to any of the preceding Claims 1 to 14 for the production of UV-curable coverings, coatings and impregnation systems.

16. Use of the composition according to any of Claims 1 to 14 for the coating of mineral substrates.

17. Use according to Claim 16 for the coating of concrete.

18. Use according to any of Claims 15 to 17 in a mixture with dispersions that differ from the compositions according to Claims 1 to 14.

19. Use according to Claim 18 in a quantitative ratio (w/w) of from 1:99 to 99:1, based in each case on the dry weight of the dispersion according to Claims 1 to 14 and of the dispersion that differs therefrom.

## Revendications

1. Composition présentant, en dispersion aqueuse
A) pour 100 parties en poids d'un ou de plusieurs polymères de (méth)acrylate ;
B) 1-400 parties en poids d'un ou de plusieurs polymères de (méth)acrylate, qui contiennent un ou plusieurs des composés de formule générale (I) sous forme copolymérisée et qui sont différents des polymères de (méth)acrylate mentionnés au point A) et qui peuvent être obtenus par polymérisation en émulsion d'un mélange, présentant
a) 0,1 à 99,9 parties en poids d'au moins un composé de formule générale (I) 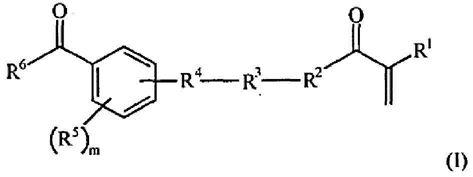 dans laquelle
R¹ signifie hydrogène ou méthyle ;
R² représente oxygène ou NH ;
R³ représente un radical de formule générale II 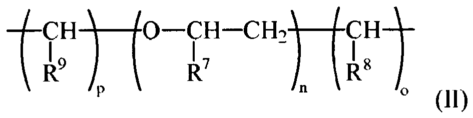 où
R⁷, R⁸, R⁹ représentent, indépendamment les uns des autres, hydrogène ou méthyle,
n vaut un nombre entier de zéro à deux cents et
o et p valent, indépendamment l'un de l'autre, un nombre entier de zéro à deux, R³ étant une liaison lorsque la somme de n et o et p vaut zéro ;
R⁴ représente une liaison, oxygène, NH, O-CO-O, HN-CO-O, HN-CO-NH ou soufre ;
R⁵ représente hydrogène, halogène ou un radical présentant un à 20 atomes de carbone, qui est le cas échéant substitué par oxygène, azote et/ou soufre, m valant un nombre entier de un à quatre ; et
R⁶ représente un radical aryle ou hétérocyclyle ;
et
b) 99,9 à 0,1% en poids d'un ou de plusieurs de monomères éthyléniquement insaturés différents de a), copolymérisables avec a), les composants a) et b) représentant ensemble 100% en poids des constituants polymérisables du mélange ;
et les parties en poids de A) et B) se rapportant à la proportion en solides des polymères A) ou B) dans la dispersion aqueuse.

2. Composition selon la revendication 1, **caractérisée en ce que** R¹ représente méthyle.

3. Composition selon la revendication 1 ou 2, **caractérisée en ce que** R² représente oxygène.

4. Composition selon l'une quelconque des revendications précédentes, **caractérisée en ce que** par le R⁴ représente une liaison.

5. Composition selon l'une quelconque des revendications précédentes, **caractérisée en ce que** p = o = zéro et n vaut un nombre entier entre 1 et 20.

6. Composition selon la revendication 5, **caractérisée en ce que** R⁷ = hydrogène.

7. Composition selon l'une quelconque des revendications 1 à 4, **caractérisée en ce que** p = o = n = zéro.

8. Composition selon l'une quelconque des revendications précédentes, **caractérisée en ce que** tous les R⁵ représentent hydrogène.

9. Composition selon l'une quelconque des revendications précédentes, **caractérisée en ce que** R⁶ représente phényle.

10. Composition selon l'une quelconque des revendications précédentes, **caractérisée en ce que** le composant b) est choisi parmi les monomères de (méth)acrylate.

11. Composition selon la revendication 10, **caractérisée en ce que** le composant b) est choisi parmi le méthacrylate de méthyle, l'acrylate de butyle et l'acide méthacrylique ou un mélange de deux ou des trois composants mentionnés ci-avant.

12. Composition selon la revendication 11, **caractérisée en ce que** b) comprend du méthacrylate de méthyle, de l'acrylate de butyle et de l'acide méthacrylique dans un rapport de 55:44:1 à 45:54:1, par rapport à la somme des poids des trois constituants mentionnés de b) à 100% en poids.

13. Composition selon l'une quelconque des revendications précédentes, **caractérisée en ce que** le polymère de (méth)acrylate A) peut être obtenu par copolymérisation de monomères choisis parmi le méthacrylate de méthyle, l'acrylate de butyle et l'acide méthacrylique ou un mélange de deux ou des trois composants mentionnés ci-avant.

14. Composition selon la revendication 13, **caractérisée en ce que** A) comprend du méthacrylate de méthyle, de l'acrylate de butyle et de l'acide méthacrylique dans un rapport de 55:44:1 à 45:54:1, par rapport à la somme des poids des trois constituants mentionnés de A) à 100% en poids.

15. Utilisation de la composition selon l'une quelconque des revendications précédentes 1 à 14 pour la préparation de recouvrements, de revêtements et d'imprégnations durcissables aux UV.

16. Utilisation de la composition selon l'une quelconque des revendications 1 à 14 pour le revêtement de substrats minéraux.

17. Utilisation selon la revendication 16 pour le revêtement de béton.

18. Utilisation selon l'une quelconque des revendications 15 à 17 en mélange avec des dispersions différentes des compositions selon les revendications 1 à 14.

19. Utilisation selon la revendication 18 dans un rapport pondéral (P/P) de 1:99 à 99:1, à chaque fois par rapport au poids de la proportion sèche de la dispersion selon les revendications 1 à 14 ainsi que de la dispersion différente de celle-ci.
